# EUROPEAN PATENT APPLICATION

(11) **EP 3 739 415 A1**
(43) Date of publication of application: **18.11.2020**
(21) Application number: 18900174.6
(22) Date of filing: 05.10.2018
(51) Int. Cl.: G05D 1/02, A63H 11/20, A63H 30/02, B25J 5/00, B25J 13/00, G10L 25/51

(54) **INFORMATION PROCESSING DEVICE, INFORMATION PROCESSING METHOD AND PROGRAM**

(30) Priority: 09.01.2018 JP 2018000943
(71) Applicant: Sony Corporation, 108-0075 Tokyo (JP)
(72) Inventor: KOYAMA, Yuichiro, Tokyo 108-0075 (JP); KOHARA, Ichitaro, Tokyo 108-0075 (JP)
(74) Representative: MFG Patentanwälte Meyer-Wildhagen Meggle-Freund Gerhard PartG mbB
(86) International application number: PCT/JP2018/037432
(87) International publication number: WO 2019/138619

(57) **Abstract**

[Object] To achieve a more natural and flexible action of an autonomous moving body based on an estimated sound source direction.

[Solution] There are provided an information processor including an action planning unit performing action planning of a moving body acting based on recognition processing, and an evaluation section evaluating reliability of an estimated sound source direction, the action planning unit planning a direction-dependent motion of the moving body corresponding to the sound source direction based on evaluation results of the reliability by the evaluation section and past evaluation achievements; and an information processing method including causing a processor to perform action planning of a moving body acting based on recognition processing, and evaluate reliability of an estimated sound source direction, the performing the action planning further including planning a direction-dependent motion of the moving body corresponding to the sound source direction based on evaluation results of the reliability and past evaluation achievements.

## Description

### Technical Field

The present disclosure relates to an information processor, an information processing method, and a program.

### Background Art

In recent years, various apparatuses have been developed that estimate a direction of a sound source such as an utterance of a user and execute a motion dependent on a direction of the sound source. Examples of the above-described apparatuses include an autonomous moving body that executes an autonomous motion on the basis of an estimated sound source direction. For example, PTL 1 discloses a robot that executes a preset motion when reliability of an estimated sound source direction is low.

### Citation List

### Patent Literature

PTL 1: Japanese Unexamined Patent Application Publication No. 2012-40655

### Summary of the Invention

### Problem to be Solved by the Invention

However, the robot described in PTL 1 is assumed to operate in a very limited environment such as a circumstance surrounded by speakers in a conference room, and thus a case is also presumed where the robot may not be able to obtain satisfactory effects in an environment deviated from the above assumption.

Therefore, the present disclosure proposes an information processor, an information processing method, and a program that are novel and improved, and make it possible to achieve a more natural and flexible action of an autonomous moving body on the basis of an estimated sound source direction.

### Means for Solving the Problem

According to the present disclosure, there is provided an information processor including an action planning unit that performs action planning of a moving body acting on a basis of recognition processing, and an evaluation section that evaluates reliability of an estimated sound source direction, in which the action planning unit plans a direction-dependent motion of the moving body corresponding to the sound source direction on a basis of a result of the evaluation of the reliability made by the evaluation section and a past evaluation achievement.

In addition, according to the present disclosure, there is provided an information processing method including causing a processor to: perform action planning of a moving body acting on a basis of recognition processing; and evaluate reliability of an estimated sound source direction, in which the performing of the action planning further includes planning a direction-dependent motion of the moving body corresponding to the sound source direction on a basis of a result of the evaluation of the reliability and a past evaluation achievement.

In addition, according to the present disclosure, there is provided a program that causes a computer to function as an information processor, in which the information processor includes an action planning unit that performs action planning of a moving body acting on a basis of recognition processing, and an evaluation section that evaluates reliability of an estimated sound source direction, in which the action planning unit plans a direction-dependent motion of the moving body corresponding to the sound source direction on a basis of a result of the evaluation of the reliability made by the evaluation section and a past evaluation achievement.

### Effect of the Invention

As described above, according to the present disclosure, it is possible to achieve a more natural and flexible action of the autonomous moving body based on an estimated sound source direction.

It is to be noted that the above-mentioned effects are not necessarily limitative; in addition to or in place of the above effects, there may be achieved any of the effects described in the present specification or other effects that may be grasped from the present specification.

### Brief Description of the Drawings

[FIG. 1] FIG. 1 illustrates a hardware configuration example of an autonomous moving body according to an embodiment of the present disclosure.
[FIG. 2] FIG. 2 is a configuration example of actuators included in the autonomous moving body according to an embodiment of the present disclosure.
[FIG. 3] FIG. 3 is an explanatory diagram of an operation of the actuator included in the autonomous moving body according to an embodiment of the present disclosure.
[FIG. 4] FIG. 4 is an explanatory diagram of an operation of the actuator included in the autonomous moving body according to an embodiment of the present disclosure.
[FIG. 5] FIG. 5 is an explanatory diagram of functions of a display included in the autonomous moving body according to an embodiment of the present disclosure.
[FIG. 6] FIG. 6 illustrates motion examples of the autonomous moving body according to an embodiment of the present disclosure.
[FIG. 7] FIG. 7 illustrates an example of a system configuration according to an embodiment of the present disclosure.
[FIG. 8] FIG. 8 illustrates a functional configuration example of the autonomous moving body according to an embodiment of the present disclosure.
[FIG. 9] FIG. 9 is an example of a functional block diagram focusing on sound source direction estimation of the autonomous moving body according to an embodiment of the present disclosure.
[FIG. 10] FIG. 10 illustrates a functional configuration example of an information processing server according to an embodiment of the present disclosure.
[FIG. 11] FIG. 11 is an explanatory diagram of a relationship between a position in a space and accuracy of the sound source direction estimation.
[FIG. 12] FIG. 12 is an explanatory diagram of reliability evaluation based on user recognition according to a first embodiment of the present disclosure.
[FIG. 13] FIG. 13 is an explanatory diagram of reliability evaluation based on an obstacle map according to the same embodiment.
[FIG. 14] FIG. 14 is an explanatory diagram of reliability evaluation based on a reliability map according to the same embodiment.
[FIG. 15] FIG. 15 is an explanatory diagram of reliability evaluation based on an existence probability map according to the same embodiment.
[FIG. 16] FIG. 16 illustrates an example of past evaluation achievements held by an evaluation result holding section according to the same embodiment.
[FIG. 17] FIG. 17 is an explanatory diagram of action planning based on user designation according to the same embodiment.
[FIG. 18] FIG. 18 illustrates an example of a direction weight based on map information according to the same embodiment.
[FIG. 19] FIG. 19 illustrates an example of sound source direction estimation using the direction weight based on the map information according to the same embodiment.
[FIG. 20] FIG. 20 illustrates an example of a direction weight based on image information according to the same embodiment.
[FIG. 21] FIG. 21 illustrates an example of sound source direction estimation using the direction weight based on the image information according to the same embodiment.
[FIG. 22] FIG. 22 is an explanatory diagram of calculation of a direction weight based on the map information and the image information according to the same embodiment.
[FIG. 23] FIG. 23 illustrates an example of the direction weight based on the map information and the image information according to the same embodiment.
[FIG. 24] FIG. 24 illustrates an example of a feature amount calculated in all directional ranges by a sound localization section according to the same embodiment.
[FIG. 25] FIG. 25 illustrates an example of a feature amount after integration of the direction weight by the sound localization section according to the same embodiment.
[FIG. 26] FIG. 26 is a flowchart illustrating a flow of action planning based on the sound source direction estimation made by the autonomous moving body according to the same embodiment.
[FIG. 27] FIG. 27 is an explanatory diagram of a control of a shielding state of microphone holes based on difficulty in voice recognition according to a second embodiment of the present disclosure.
[FIG. 28] FIG. 28 illustrates a hardware configuration example of an information processing server according to an embodiment of the present disclosure.

### Modes for Carrying Out the Invention

Hereinafter, description is given in detail of preferred embodiments of the present disclosure with reference to the accompanying drawings. It is to be noted that, in the present specification and drawings, repeated description is omitted for components substantially having the same functional configuration by assigning the same reference numerals.

It is to be noted that description is given in the following order.
1. Configuration
   1.1. Overview of Autonomous Moving Body 10
   1.2. Hardware Configuration Example of Autonomous Moving Body 10
   1.3. Systems Configuration Example
   1.4. Functional Configuration Example of Autonomous Moving Body 10
   1.5. Functional Configuration Example of Information Processing Server 20
2. First Embodiment
   2.1. Overview
   2.2. Evaluation of Reliability of Sound Source Direction Estimation
   2.3. Action Planning Based on Reliability Evaluation
   2.4. Estimation of Sound Source Direction Based on Direction Weight
   2.5. Flow of Action Planning Based on Sound Source Direction Estimation
3. Second Embodiment
   3.1. Overview
   3.2. Shielding Control of Microphone Hole
4. Hardware Configuration Example
5. Conclusion

### <1. Configuration>

### <1.1. Overview of Autonomous Moving Body 10>

First, description is given of an overview of an autonomous moving body 10 according to an embodiment of the present disclosure. The autonomous moving body 10 according to an embodiment of the present disclosure is an information processor that estimates circumstances on the basis of collected sensor information and autonomously selects and executes various motions according to circumstances. One of features of the autonomous moving body 10 is to autonomously execute motions that are presumed to be optimal for each circumstance, unlike a robot that simply performs motions in conformity with commands instructed by a user.

The autonomous moving body 10 according to an embodiment of the present disclosure is able to, for example, estimate a direction of a user who has made an utterance and to execute various motions dependent on the direction (hereinafter, also referred to as direction-dependent motions). Here, the direction-dependent motion includes, for example, motions such as turning a head or a line of sight in the direction of the user, or running (moving) in the direction of the user.

In addition, the autonomous moving body 10 according to an embodiment of the present disclosure is able to evaluate reliability of the estimated sound source direction and to execute an autonomous motion based on results of the evaluation. For example, in a case where the reliability of the sound source direction is low, the autonomous moving body 10 may take an action such as moving to a location which makes it easier to detect a direction of an utterance of the user in order to improve accuracy of sound localization of the next utterance of the user.

In this manner, the autonomous moving body 10 according to an embodiment of the present disclosure comprehensively judges its own state, the surrounding environment, and the like similarly to animals including humans, to thereby determine and execute autonomous motions. In the above respects, the autonomous moving body 10 according to an embodiment of the present disclosure obviously differs from a passive apparatus that executes, on the basis of instructions, corresponding motions or processing.

The autonomous moving body 10 according to an embodiment of the present disclosure may be an autonomous moving type robot that performs an autonomous posture control in a space and executes various motions. The autonomous moving body 10 may be, for example, an autonomous moving type robot having a shape simulating a human or an animal such as a dog and having a motion capability. In addition, the autonomous moving body 10 may be, for example, an apparatus such as a vehicle or unmanned aerial vehicle having a communication capability with a user. Shapes, capabilities, or levels of desire of the autonomous moving body 10 according to an embodiment of the present disclosure may be appropriately designed in accordance with purposes and roles.

### <1.2. Hardware Configuration Example of Autonomous Moving Body 10>

Next, description is given of a hardware configuration example of the autonomous moving body 10 according to an embodiment of the present disclosure. It is to be noted that, in the following, description is given, by way of example, of a case where the autonomous moving body 10 is a dog-type four-legged walking robot.

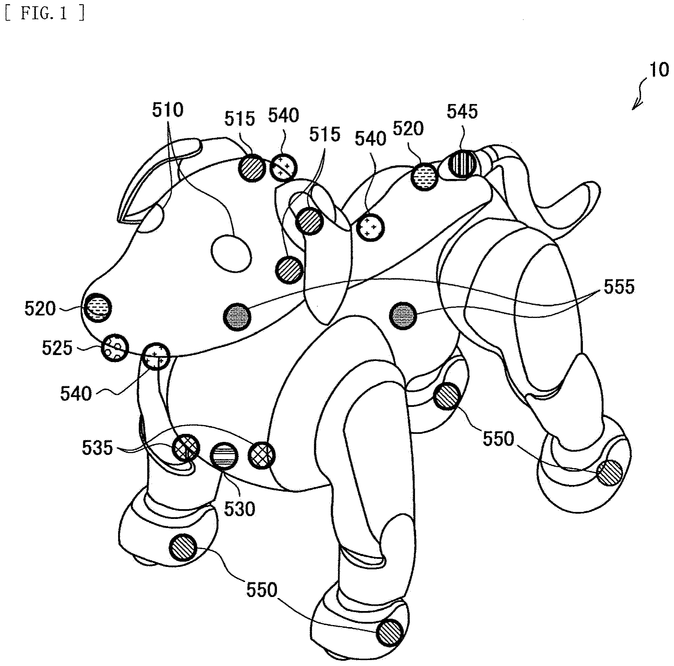

FIG. 1 illustrates a hardware configuration example of the autonomous moving body 10 according to an embodiment of the present disclosure. As illustrated in FIG. 1, the autonomous moving body 10 is a dog-type four-legged walking robot having a head, a torso, four leg parts, and a tail. In addition, the autonomous moving body 10 is provided with two displays 510 on the head.

In addition, the autonomous moving body 10 includes various sensors. The autonomous moving body 10 includes, for example, a microphone 515, a camera 520, a ToF (Time of Flight) sensor 525, a human detection sensor 530, a distance measuring sensor 535, a touch sensor 540, an illuminance sensor 545, a sole button 550, and an inertia sensor 555.

### (Microphone 515)

The microphone 515 has a function of collecting a surrounding sound. The sound includes, for example, an utterance of a user or a surrounding environmental sound. The autonomous moving body 10 may include, for example, four microphones on the head. Providing a plurality of microphones 515 makes it possible to collect sounds generated in the surroundings with high sensitivity and to achieve sound localization.

### (Camera 520)

The camera 520 has a function of capturing an image of a user or the surrounding environment. The autonomous moving body 10 may include, for example, two wide-angle cameras at the tip of a nose and at a waist. In this case, the wide-angle camera disposed at the tip of the nose captures an image corresponding to a front field of view of the autonomous moving body 10 (i.e., a field of view of the dog), and the wide-angle camera at the waist captures an image of the surrounding region centered on the upper side. The autonomous moving body 10 is able to extract feature points of a ceiling, for example, on the basis of images captured by the wide-angle camera disposed at the waist to achieve SLAM (Simultaneous Localization and Mapping).

### (ToF Sensor 525)

A ToF sensor 525 has a function of detecting a distance with respect to an object that exists in front of the head. The ToF sensor 525 is provided at the tip of the head. According to the ToF sensor 525, it is possible to detect distances with respect to various objects with high accuracy, thus making it possible to achieve motions corresponding to relative positions with respect to objects including the user and to obstacles.

### (Human Detection Sensor 530)

A human detection sensor 530 has a function of detecting a location of a user or a pet raised by the user. The human detection sensor 530 is disposed, for example, at the chest. According to the human detection sensor 530, detecting an animal body that exists in the front makes it possible to achieve various motions for the animal body, e.g., motions corresponding to emotions such as an interest, a fear, and a surprise.

### (Distance Measuring Sensor 535)

A distance measuring sensor 535 has a function of acquiring circumstances of a floor surface of the front of the autonomous moving body 10. The distance measuring sensor 535 is disposed, for example, at the chest. According to the distance measuring sensor 535, it is possible to detect a distance with respect to an object that exists on the floor surface of the front of the autonomous moving body 10 with high accuracy, thus making it possible to achieve a motion corresponding to a relative position with respect to the object.

### (Touch Sensor 540)

A touch sensor 540 has a function of detecting a contact by a user. The touch sensor 540 is disposed, for example, at a location by which the user is highly likely to touch the autonomous moving body 10, such as the top of the head, the lower jaw, or the back. The touch sensor 540 may be, for example, a capacitive or pressure sensitive touch sensor. According to the touch sensor 540, it is possible to detect a contact action such as touching, stroking, tapping, or pushing by the user, thus making it possible to perform a motion corresponding to the contact action.

### (Illuminance Sensor 545)

An illuminance sensor 545 detects illuminance in a space in which the autonomous moving body 10 is positioned. The illuminance sensor 545 may be disposed, for example, at the root of the tail on the back surface of the head. According to the illuminance sensor 545, it is possible to detect surrounding brightness and to execute a motion corresponding to the brightness.

### (Sole Button 550)

A sole button 550 has a function of detecting whether or not a bottom surface of a leg part of the autonomous moving body 10 is in contact with the floor. To this end, the sole button 550 is disposed at each of locations corresponding to pads of the four leg parts. According to the sole button 550, it is possible to detect contact or non-contact between the autonomous moving body 10 and the floor surface, thus making it possible for the autonomous moving body 10 to grasp, for example, having been lifted by the user.

### (Inertia Sensor 555)

An inertia sensor 555 is a six-axis sensor that detects physical amounts such as velocities, accelerations, and rotations of the head and the torso. That is, the inertia sensor 555 detects accelerations and angular velocities of an X-axis, a Y-axis, and a Z-axis. The inertia sensor 555 is disposed at each of the head and the torso. According to the inertia sensor 555, it is possible to detect movements of the head and torso of the autonomous moving body 10 with high accuracy, thus making it possible to achieve a motion control depending on circumstances.

The description has been given above of examples of the sensors included in the autonomous moving body 10 according to an embodiment of the present disclosure. It is to be noted that the configuration described above with reference to FIG. 1 is merely an example, and the configurations of the sensors that may be included in the autonomous moving body 10 are not limited to such examples. The autonomous moving body 10 may further include, aside from the above configuration, various communication devices including, for example, a temperature sensor, a geomagnetic sensor, or a GNSS (Global Navigation Satellite System) signal receiver. The configurations of the sensors included in the autonomous moving body 10 may be flexibly modified in accordance with specifications and operations.

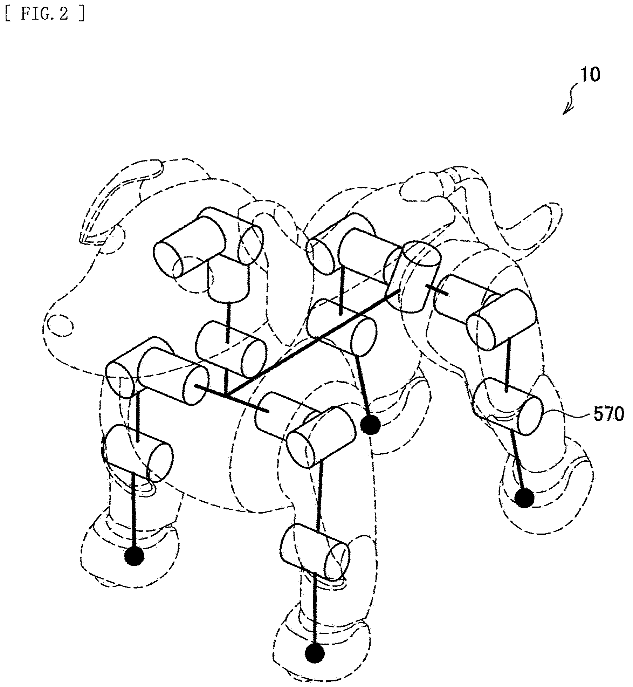

Subsequently, description is given of a configuration example of joints of the autonomous moving body 10 according to an embodiment of the present disclosure. FIG. 2 is a configuration example of actuators 570 included in the autonomous moving body 10 according to an embodiment of the present disclosure. The autonomous moving body 10 according to an embodiment of the present disclosure has a total of 22 rotational degrees of freedom, in addition to the rotary points illustrated in FIG. 2, with two for each of the ears and the tail, and one for the mouth.

For example, the autonomous moving body 10 has three degrees of freedom in the head, thereby making it possible to achieve both nodding and neck-tilting motions. In addition, the autonomous moving body 10 reproduces a swinging motion of the waist using the actuator 570 provided at the waist, thereby making it possible to achieve natural and flexible motions closer to real dogs.

It is to be noted that the autonomous moving body 10 according to an embodiment of the present disclosure may combine a single-axis actuator and a biaxial actuator, for example, to thereby achieve the above-described 22 rotational degrees of freedom. For example, the single-axis actuator may be employed at elbows and knees of the leg parts, and the biaxial actuator may be employed at shoulders and the bases of thighs.

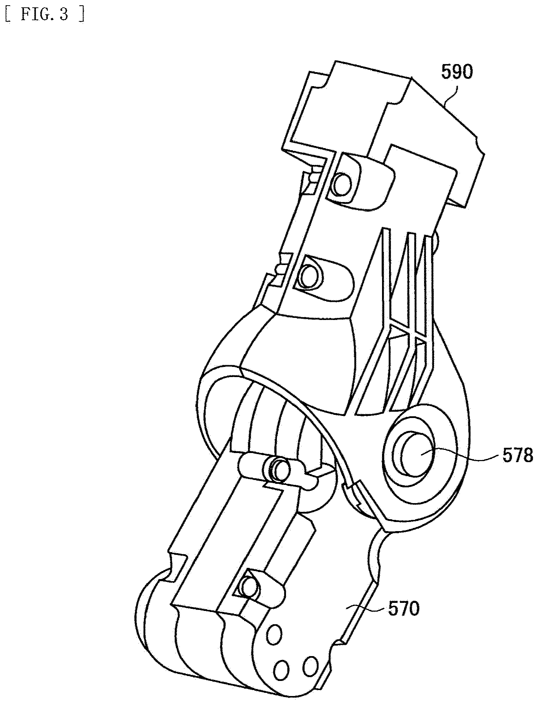

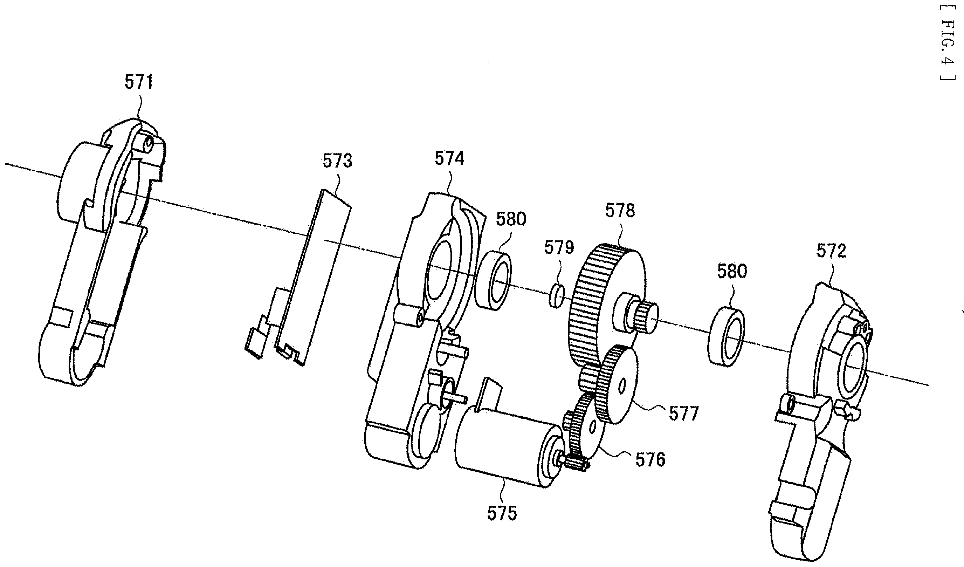

FIGs. 3 and 4 are each an explanatory diagram of motions of the actuator 570 included in the autonomous moving body 10 according to an embodiment of the present disclosure. Referring to FIG. 3, the actuator 570 rotates an output gear using the motor 575 to thereby drive a movable arm 590 at any rotational position and rotational speed.

Referring to FIG. 4, the actuator 570 according to an embodiment of the present disclosure includes a rear cover 571, a gear box cover 572, a control substrate 573, a gear box base 574, a motor 575, a first gear 576, a second gear 577, an output gear 578, a detection magnet 579, and two bearings 580.

The actuator 570 according to an embodiment of the present disclosure may be, for example, a magnetic svGMR (spin-valve Giant Magnetoresistive). The control substrate 573 rotates the motor 575 on the basis of a control made by a main processor to thereby transmit power to the output gear 578 via the first gear 576 and the second gear 577, thus making it possible to drive the movable arm 590.

In addition, a position sensor included in the control substrate 573 detects a rotation angle of the detection magnet 579 that rotates in synchronization with the output gear 578 to thereby detect the rotation angle, i.e., the rotational position of the movable arm 590 with high accuracy.

It is to be noted that the magnetic svGMR has advantages of superior durability because of its non-contact type and of being less influenced by signal variation due to distance variations of the detection magnet 579 and the position sensor when being used in a GMR-saturated region.

The description has been given above of the configuration example of the actuators 570 included in the autonomous moving body 10 according to an embodiment of the present disclosure. According to the above configuration, it is possible to control bending and stretching motions of the joints of the autonomous moving body 10 with high accuracy, and to detect rotational positions of the joints accurately.

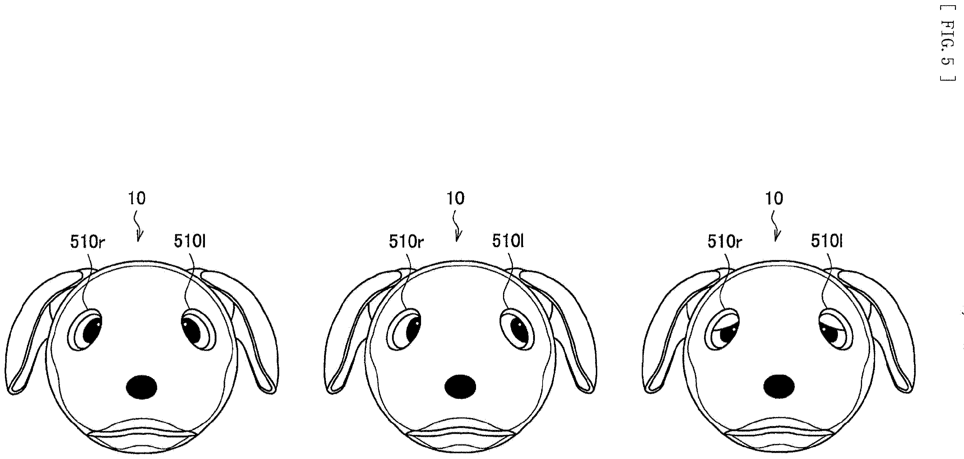

Subsequently, description is given of functions of the display 510 included in the autonomous moving body 10 according to an embodiment of the present disclosure, with reference to FIG. 5. FIG. 5 is an explanatory diagram of the functions of the display 510 included in the autonomous moving body 10 according to an embodiment of the present disclosure.

### (Display 510)

The display 510 has a function of visually expressing movements of eyes and emotions of the autonomous moving body 10. As illustrated in FIG. 5, the display 510 is able to express motions of an eyeball, a pupil, and an eyelid in response to emotions and motions. The display 510 does not intentionally display a letter, a symbol, an image not related to movements of an eyeball, or the like, to thereby produce a natural motion close to an animal such as a real live dog.

In addition, as illustrated in FIG. 5, the autonomous moving body 10 includes two displays 510r and 5101 corresponding to the right eye and the left eye, respectively. The displays 510r and 5101 are implemented, for example, by two independent OLEDs (Organic Light Emitting Diode). According to the OLED, it is possible to reproduce a curved surface of the eyeball, thus making it possible to achieve a more natural exterior, as compared with a case where a pair of eyeballs is expressed by one flat display or a case where two eyeballs are expressed by respective two independent flat displays.

As described above, according to the displays 510r and 5101, it is possible to express lines of sight and emotions of the autonomous moving body 10 as illustrated in FIG. 5 with high accuracy and flexibility. In addition, it is possible for the user to intuitively grasp the state of the autonomous moving body 10 from the motion of the eyeballs displayed on the displays 510.

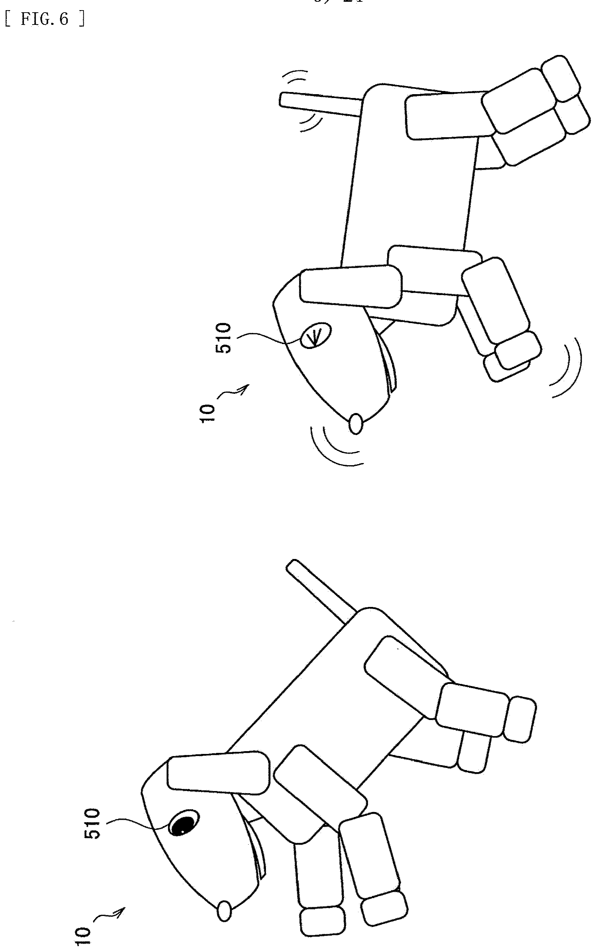

The description has been given above of the hardware configuration example of the autonomous moving body 10 according to an embodiment of the present disclosure. According to the above configuration, controlling the motions of the joints and the eyeballs of the autonomous moving body 10 with high accuracy and flexibility makes it possible to achieve a motion and an emotional expression closer to a real living creature, as illustrated in FIG. 6. It is to be noted that FIG. 6 illustrates motion examples of the autonomous moving body 10 according to an embodiment of the present disclosure; however, FIG. 6 illustrates an external structure of the autonomous moving body 10 in a simplified manner to give description, focusing on the motions of the joints and the eyeballs of the autonomous moving body 10. Similarly, in the following description, the external structure of the autonomous moving body 10 may be illustrated in a simplified manner in some cases; however, the hardware configuration and the exterior of the autonomous moving body 10 according to an embodiment of the present disclosure are not limited to the examples illustrated in the drawings, and may be appropriately designed.

### «1.3. System Configuration Example»

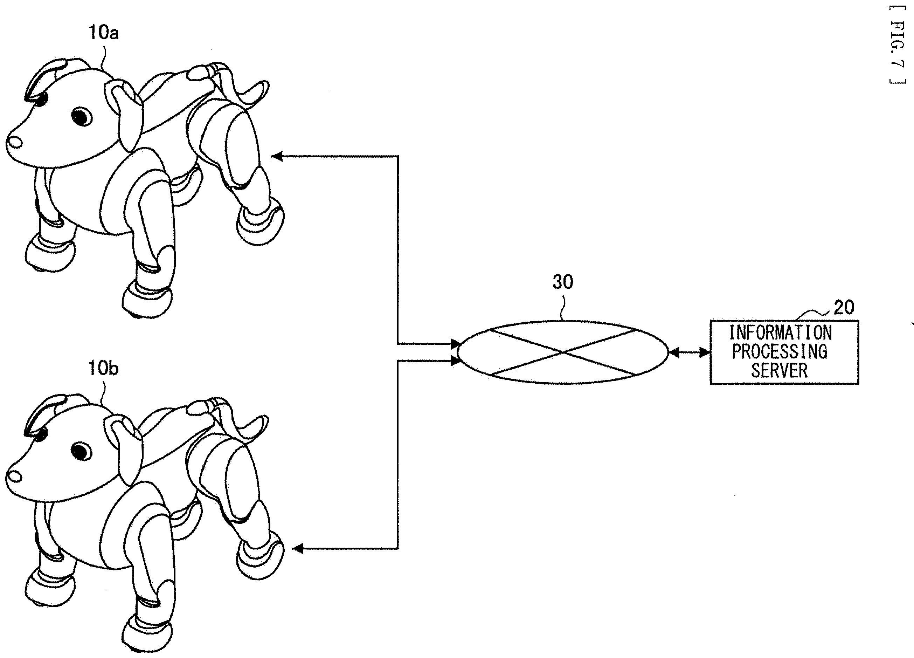

Next, description is given of a system configuration example according to an embodiment of the present disclosure. FIG. 7 illustrates an example of a system configuration according to an embodiment of the present disclosure. Referring to FIG. 7, an information processing system according to an embodiment of the present disclosure may include a plurality of autonomous moving bodies 10 and an information processing server 20. It is to be noted that the autonomous moving body 10 and the information processing server 20 as well as the autonomous moving bodies 10 are coupled to each other via a network 30.

### (Autonomous Moving Body 10)

The autonomous moving body 10 according to an embodiment of the present disclosure is an information processor that estimates circumstances on the basis of collected sensor information and autonomously selects and executes various motions in response to the circumstances. As described above, the autonomous moving body 10 according to an embodiment of the present disclosure may be, for example, an autonomous moving type robot having a shape simulating a human or an animal such as a dog and having a motion capability.

### (Information Processing Server 20)

The information processing server 20 according to an embodiment of the present disclosure is an information processor that is coupled to the plurality of autonomous moving bodies 10 and has a function of collecting various types of information from the autonomous moving bodies 10. For example, the information processing server 20 is able to accumulate motion history collected from each of the autonomous moving bodies 10 and to perform various analyses based on the motion history. In addition, the information processing server 20 according to an embodiment of the present disclosure may distribute results of the above analyses to the plurality of autonomous moving bodies 10.

### (Network 30)

The network 30 has a function of coupling the autonomous moving body 10 and the information processing server 20 to each other as well as the autonomous moving bodies 10 to each other. The network 30 may include a public network such as the Internet, a telephone network, a satellite communication network, various types of LAN (Local Area Network) including Ethernet (registered trademark), and WAN (Wide Area Network). In addition, the network 30 may include a private network such as IP-VPN (Internet Protocol-Virtual Private Network). In addition, the network 30 may include a wireless communication network such as Wi-Fi (registered trademark) or Bluetooth (registered trademark).

The description has been given above of the system configuration example according to an embodiment of the present disclosure. It is to be noted that the configuration described above with reference to FIG. 7 is merely an example, and the configuration of the information processing system according to an embodiment of the present disclosure is not limited to such an example. For example, the autonomous moving body 10 may further perform information communication with various external apparatuses in addition to the information processing server 20. Examples of the above-mentioned external apparatuses may include a server that transmits information on weather, news, and other services, various information processing terminals owned by a user, home electric appliances, and the like. The system configuration according to an embodiment of the present disclosure may be flexibly modified in accordance with specifications and operations.

### «1.4. Functional Configuration Example of Autonomous Moving Body 10»

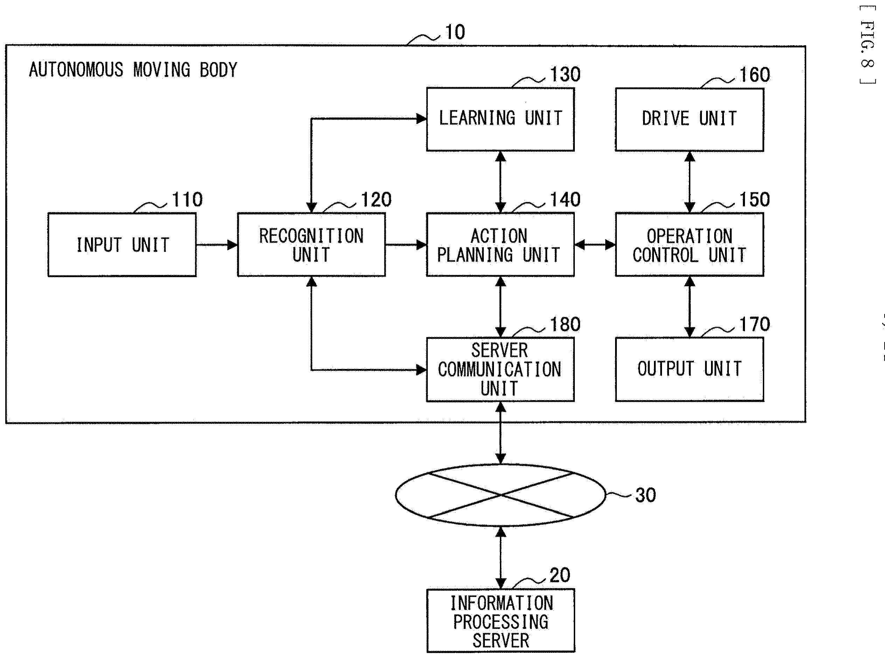

Next, description is given of a functional configuration example of the autonomous moving body 10 according to an embodiment of the present disclosure. FIG. 8 illustrates a functional configuration example of the autonomous moving body 10 according to an embodiment of the present disclosure. Referring to FIG. 8, the autonomous moving body 10 according to an embodiment of the present disclosure includes an input unit 110, a recognition unit 120, a learning unit 130, an action planning unit 140, an operation control unit 150, a drive unit 160, an output unit 170, and a server communication unit 180.

### (Input Unit 110)

The input unit 110 has a function of collecting various types of information regarding a user and a surrounding environment. The input unit 110 collects, for example, an utterance of the user, environmental sounds generated in the surroundings, image information regarding the user and the surrounding environment, and various types of sensor information. To this end, the input unit 110 includes various sensors illustrated in FIG. 1.

### (Recognition Unit 120)

The recognition unit 120 has a function of performing various recognitions of the user, the surrounding environment, and the state of the autonomous moving body 10 on the basis of various types of information collected by the input unit 110. For instances, the recognition unit 120 may perform human recognition, recognition of facial expressions and lines of sight, object recognition, color recognition, shape recognition, marker recognition, obstacle recognition, step recognition, brightness recognition, and the like.

In addition, the recognition unit 120 performs emotion recognition, word understanding, sound localization, and the like of a voice of the user. In addition, the recognition unit 120 is able to recognize a contact made by the user or the like, a surrounding temperature, existence of an animal body, a posture of the autonomous moving body 10, and the like.

Further, the recognition unit 120 has a function of estimating and understanding the surrounding environment and circumstances in which the autonomous moving body 10 is located, on the basis of the above-mentioned recognized information. At this time, the recognition unit 120 may perform comprehensive estimation of circumstances using environmental knowledge stored in advance.

### (Learning Unit 130)

The learning unit 130 has a function of learning an environment (circumstance) and an action as well as an effect of the action on the environment. The learning unit 130 implements the learning described above using, for example, a machine learning algorithm such as deep learning (Deep Learning). It is to be noted that the learning algorithm employed by the learning unit 130 is not limited to the above-described example, and may be appropriately designed.

### (Action Planning Unit 140)

The action planning unit 140 has a function of planning an action to be performed by the autonomous moving body 10 on the basis of the circumstance estimated by the recognition unit 120 and the knowledge learned by the learning unit 130. The details of the function of the action planning unit 140 according to an embodiment of the present disclosure description are described later separately.

### (Operation Control Unit 150)

The operation control unit 150 has a function of controlling operations of the drive unit 160 and the output unit 170 on the basis of action planning performed by the action planning unit 140. For example, the operation control unit 150 performs rotational control of the actuators 570, display control of the display 510, sound output control by a speaker, and the like on the basis of the above-mentioned action plan. The details of the function of the operation control unit 150 according to an embodiment of the present disclosure are described separately.

### (Drive Unit 160)

The drive unit 160 has a function of bending and stretching a plurality of joints of the autonomous moving body 10 under the control of the operation control unit 150. More specifically, the drive unit 160 drives the actuators 570 included in the respective joints under the control of the operation control unit 150.

### (Output Unit 170)

The output unit 170 has a function of outputting visual information and sound information under the control of the operation control unit 150. To this end, the output unit 170 includes the display 510 or a speaker.

### (Server Communication Unit 180)

The server communication unit 180 has a function of performing information communication with the information processing server 20 and another autonomous moving body 10. For example, the server communication unit 180 transmits, to the information processing server 20, information, etc. regarding circumstances recognized by the recognition unit 120. In addition, for example, the server communication unit 180 receives, from the information processing server 20, a recommended action and control sequence data regarding the recommended action.

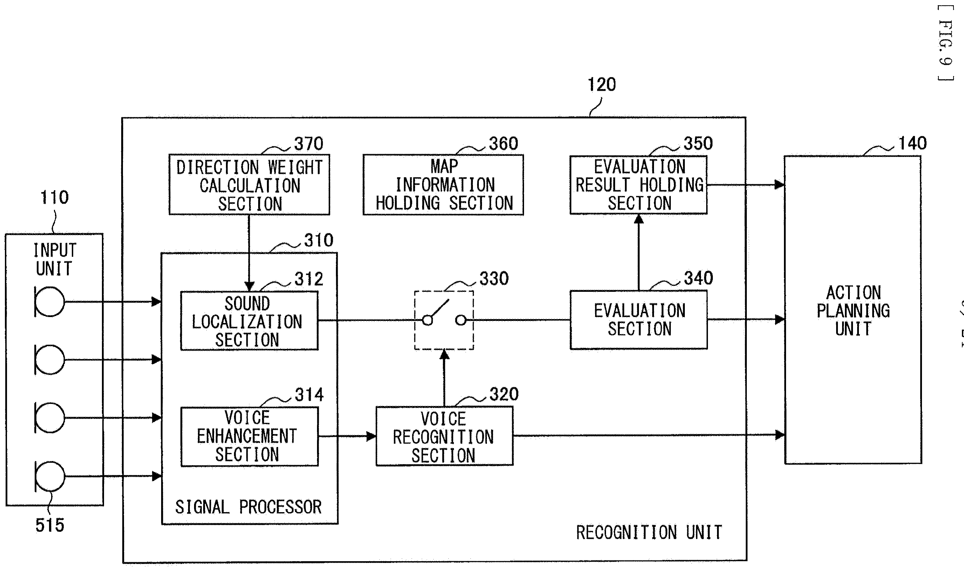

The description has been given above of the basic configuration example of the autonomous moving body 10 according to an embodiment of the present disclosure. Subsequently, description is given in detail of a functional configuration example focusing on sound source direction estimation of the autonomous moving body 10 according to an embodiment of the present disclosure. FIG. 9 is an example of a functional block diagram focusing on the sound source direction estimation of the autonomous moving body 10 according to an embodiment of the present disclosure.

Referring to FIG. 9, the recognition unit 120 according to an embodiment of the present disclosure includes a signal processor 310, a voice recognition section 320, a switch 330, an evaluation section 340, an evaluation result holding section 350, a map information holding section 360, and a direction weight calculation section 370.

### (Signal Processor 310)

The signal processor 310 performs signal processing based on sound information collected by the plurality of microphones 515 included in the input unit 110. The signal processor 310 includes a sound localization section 312 and a voice enhancement section 314.

### ((Sound Localization Section 312))

The sound localization section 312 performs sound source direction estimation, i.e., sound localization, on the basis of the sound information inputted from the input unit 110. The sound localization section 312 is able to estimate, for example, a direction, etc. in which the user has made an utterance.

In addition, the sound localization section 312 may perform sound source direction estimation on the basis of a direction weight calculated by the direction weight calculation section 370. The details of the above-described functions of the sound localization section 312 are described separately.

### ((Voice Enhancement Section 314))

The voice enhancement section 314 performs noise removal or the like on the sound information inputted from the input unit 110, and enhances a target sound (e.g., an utterance of a user). It is possible for the voice enhancement section 314 to achieve voice enhancement using, for example, techniques such as beam forming or spectral subtraction.

### (Voice Recognition Section 320)

The voice recognition section 320 performs voice recognition on the basis of voice information enhanced by the voice enhancement section 314. In addition, in a case where determination is made that the recognized voice is a call to the autonomous moving body 10, such as "come here", "let's play," or "cute", the voice recognition section 320 controls the switch 330 to allow the estimated sound source direction estimated by the sound localization section 312 to be inputted to the evaluation section 340.

### (Switch 330)

The switch 330 switches on and off a circuit involved with the input from the sound localization section 312 to the evaluation section 340, on the basis of a result of the above-described determination made by the voice recognition section 320.

### (Evaluation Section 340)

The evaluation section 340 evaluates reliability of the sound source direction estimated by the sound localization section 312. At this time, one of features of the evaluation section 340 according to an embodiment of the present disclosure is to evaluate the above-described reliability on the basis of past evaluation achievements. The details of the functions of the evaluation section 340 are described later separately.

### (Evaluation Result Holding Section 350)

The evaluation result holding section 350 holds results of the reliability evaluation of the sound source direction made by the evaluation section 340. The results of the reliability evaluation (evaluation achievements) held by the evaluation result holding section 350 are used for the action planning performed by the action planning unit 140.

### (Map Information Holding Section 360)

The map information holding section 360 holds various types of map information regarding a space in which the autonomous moving body 10 exists. The above map information includes, for example, room layouts, obstacles, a furniture installation status, and the like of a home of the user where the autonomous moving body 10 is installed.

### (Direction Weight Calculation Section 370)

The direction weight calculation section 370 performs direction weighting for the sound source estimation on the basis of the map information held by the map information holding section 360, information on images captured by the autonomous moving body 10, etc., a posture status of the autonomous moving body 10, and the like. It is to be noted that the posture in the present disclosures includes a three-axis posture and a position of the autonomous moving body 10. The details of the functions of the direction weight calculation section 370 are described later separately.

The description has been given above of the functional configuration example of the autonomous moving body 10 according to an embodiment of the present disclosure with reference to FIGs. 8 and 9. It is to be noted that the configuration described above with reference to FIGs. 8 and 9 is merely an example, and the functional configuration of the autonomous moving body 10 according to an embodiment of the present disclosure is not limited to such an example. The functional configuration of the autonomous moving body 10 according to an embodiment of the present disclosure may be flexibly modified in accordance with specifications and operations.

### «1.5. Functional Configuration Example of Information Processing Server 20»

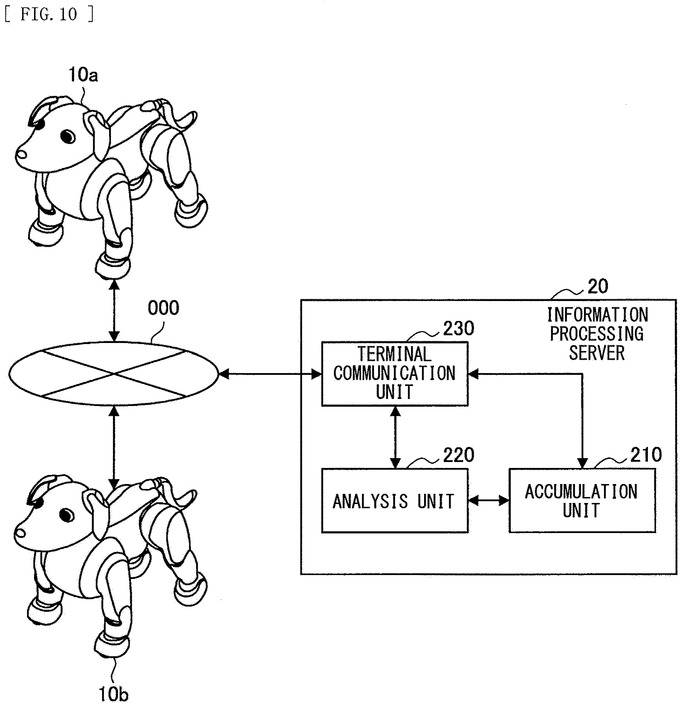

Next, description is given of a functional configuration example of the information processing server 20 according to an embodiment of the present disclosure. FIG. 10 illustrates a functional configuration example of the information processing server 20 according to an embodiment of the present disclosure. Referring to FIG. 10, the information processing server 20 according to an embodiment of the present disclosure includes an accumulation unit 210, an analysis unit 220, and a terminal communication unit 230.

### (Accumulation Unit 210)

The accumulation unit 210 collects motion history and evaluation achievements regarding the sound source direction estimation from the plurality of autonomous moving bodies 10, and accumulates such information.

### (Analysis Unit 220)

The analysis unit 220 executes various analyses on the basis of the information accumulated by the accumulation unit 210. The analysis unit 220 is able to analyze, for example, a tendency, etc. of reliability of the sound source direction estimation in typical Japanese condominiums on the basis of evaluation achievements regarding the sound source direction estimation collected and accumulated by the plurality of autonomous moving bodies 10.

In addition, the analysis unit 220 has a function of distributing results of the analyses as described above and the evaluation achievements accumulated by the accumulation unit 210 to the plurality of autonomous moving bodies 10 via the terminal communication unit 230. According to the above-described functions of the analysis unit 220, it is possible for the plurality of the autonomous moving bodies 10 to share the evaluation achievements regarding the reliability of the sound source direction estimation without confining the evaluation achievements in each individual, thus making it possible to achieve a more flexible and efficient action plan.

### (Terminal Communication Unit 230)

The terminal communication unit 230 has a function of performing information communication with the plurality of the autonomous moving bodies 10 via the network 30. The terminal communication unit 230 receives, for example, the evaluation achievements regarding the sound source direction estimation from the autonomous moving body 10. In addition, the terminal communication unit 230 transmits the above-described evaluation achievements and results of the analyses regarding the evaluation achievements to the plurality of autonomous moving bodies 10, for example, under the control of the analysis unit 220.

The description has been given above of the functional configuration example of the information processing server 20 according to an embodiment of the present disclosure. It is to be noted that the configuration described above with reference to FIG. 10 is merely an example, and the functional configuration of the information processing server 20 according to an embodiment of the present disclosure is not limited to such an example. For example, the information processing server 20 may further include a configuration that achieves functions similar to those of the action planning unit 140 and the evaluation section 340 of the autonomous moving body 10. The functional configuration of the information processing server 20 according to an embodiment of the present disclosure may be flexibly modified in accordance with specifications and operations.

### <2. First Embodiment>

### «2.1. Overview»

Next, description is given of a first embodiment of the present disclosure. As described above, the autonomous moving body 10 according to an embodiment of the present disclosure is able to estimate a direction of a sound source including an utterance of a user or the like, and to perform various autonomous motions based on the direction. For example, the autonomous moving body 10 is able to perform an action such as reacting a call of the user to itself to turn the head or the line of sight in a direction in which the utterance is detected or to run (move) in the direction.

However, in the case of an environment where a sound (noise) other than the utterance of the user is large, an environment under strong influence of a reflected wave, an environment under strong reverberation, or the like, it is presumed that a wrong direction may be detected as the sound source direction. In such a case, the autonomous moving body 10 may turn the line of sight or move in a direction different from the direction in which the user has made the utterance, thus resulting in a strong sense of discomfort or a stress of the user.

In order to avoid the above-mentioned situations, for example, as described in PTL 1, it is presumed that the reliability of the estimated sound source direction may be evaluated, and a predetermined motion may be executed in a case where the reliability is low. According to such a method, it is possible to achieve a motion that falls under a presumption of the user, even in a case where the reliability of the sound source direction estimation is low, thereby making it possible to alleviate the sense of discomfort and the stress of the user.

However, the robot described in PTL 1 is assumed to operate in an environment where the influences of noises and reflected waves are small, and there is hardly any movement (position change) of the user and the robot, such as a circumstance surrounded by users in a conference room. Meanwhile, in a case of moving autonomously across a space in a wide range as in the autonomous moving body 10 according to an embodiment of the present disclosure, it is presumed that degrees of influences of reflected waves and noises largely differ depending on own positions and postures in the space.

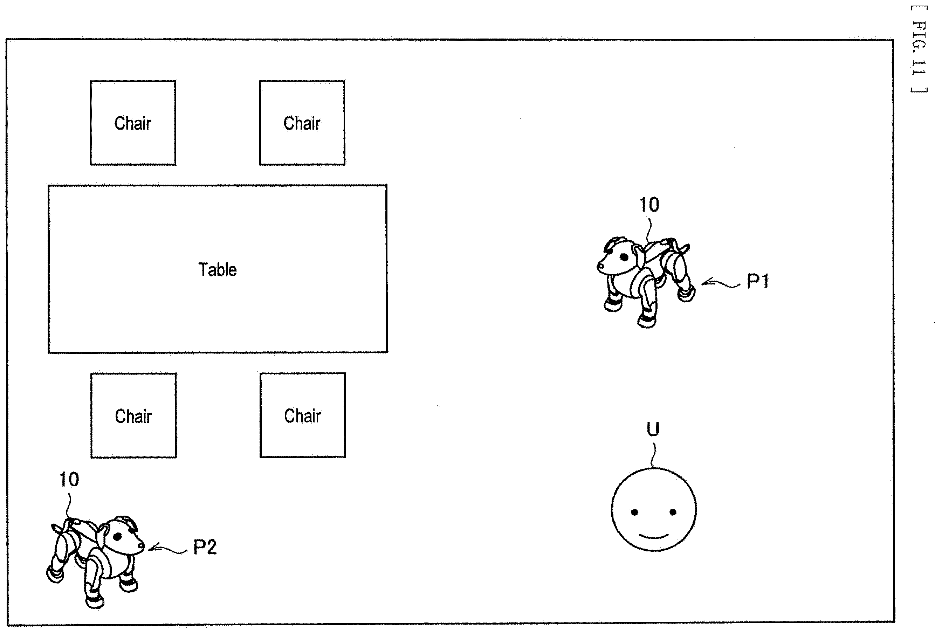

FIG. 11 is an explanatory diagram of a relationship between a position in a space and accuracy of the sound source direction estimation. FIG. 11 illustrates positions of the autonomous moving bodies 10 that perform autonomous movements in a space in an own home, etc. of the user and a user U.

Here, for example, in a case where the autonomous moving body 10 is positioned at an open location such as a position PI and no obstacle exists between the autonomous moving body 10 and the user U, the autonomous moving body 10 is able to perform highly accurate sound source direction estimation because of small influence of the reflected waves.

Meanwhile, in a case where the autonomous moving body 10 exists at a location surrounded by obstacles such as walls and furniture such as a position P2, it is presumed that the accuracy of estimation of the direction of the utterance of the user U by the autonomous moving body 10 is largely lowered because of large influence of the reflected waves from the obstacles.

The influence of such reflected waves is difficult to avoid for the autonomous moving body 10 that moves autonomously across a wide area, and it is also difficult to eliminate such influence using sound signal processing. Further, in an environment where the autonomous moving body 10 is installed, for example, home electric appliances such as a television apparatus and a washing machine are often in operation, and thus the influence of noises is not negligible. Accordingly, even in a case where the autonomous moving body 10 estimates a wrong direction, it is important to detect that the reliability of the estimated sound source direction is low and to appropriately execute a motion that does not give a sense of discomfort to the user.

The technical idea according to the first embodiment of the present disclosure has been conceived by focusing on the above-described respects, and makes it possible to achieve a more natural and flexible action of the autonomous moving body based on the estimated sound source direction. To this end, one of features of the autonomous moving body 10, which is an example of the information processor according to the present embodiment, is to evaluate the reliability of the estimated sound source direction, and to plan a direction-dependent motion corresponding to the estimated sound source direction on the basis of a result of the evaluation and past evaluation achievements.

Hereinafter, description is given in detail of the above-described features of the autonomous moving body 10 according to the present embodiment and effects to be achieved by the features.

### «2.2. Evaluation of Reliability for Sound Source Direction Estimation»

First, description is given of evaluation of reliability of the sound source direction estimation according to the present embodiment with reference to a specific example. As described above, the evaluation section 340 of the autonomous moving body 10 according to the present embodiment has a function of evaluating the reliability of the sound source direction estimated by the sound localization section 312.

The evaluation section 340 according to the present embodiment may evaluate the reliability of the sound source direction estimated by the sound localization section 312 on the basis of a result of user recognition, for example. More specifically, in a case where the user is recognized in the sound source direction estimated by the sound localization section 312, the evaluation section 340 according to the present embodiment is able to evaluate the reliability of the sound source direction to be high.

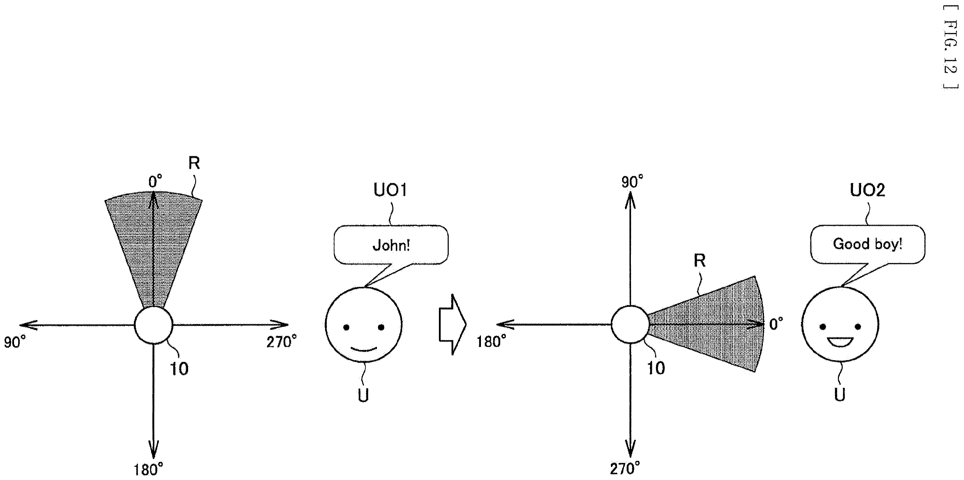

FIG. 12 is an explanatory diagram of reliability evaluation based on user recognition according to the present embodiment. FIG. 12 schematically illustrates a positional relationship between a two-dimensional posture of the autonomous moving body 10 and the user U. In addition, FIG. 12 illustrates an imaging range of the camera 520 included in the autonomous moving body 10, i.e., a recognizable range R in which the autonomous moving body 10 is able to recognize the user. It is to be noted that a head direction of the autonomous moving body 10 is defined as 0° in the drawings from FIG. 12 onwards.

Here, as illustrated on left side of FIG. 12, it is assumed that the sound localization section 312 estimates the sound source direction of an utterance UO1 to be 270° on the basis of inputted voice information when the user U has made the utterance UO1, which is a call to the autonomous moving body 10.

At this time, as illustrated on right side of FIG. 12, the action planning unit 140 according to the present embodiment performs action planning related to a posture control to allow the head of the autonomous moving body 10 to face the direction of 270° estimated by the sound localization section 312. Here, in a case where the user exists in the recognizable range R, i.e., in a case where the user is recognized in the estimated sound source direction, the evaluation section 340 according to the present embodiment may evaluate the reliability of the sound source direction estimated by the sound localization section 312 to be high.

It is to be noted that the evaluation section 340 according to the present embodiment may perform the above-described evaluation on the basis of a result of facial recognition made by the recognition unit 120, for example. In addition, in a case where the recognition unit 120 detects a moving object in a location where no obstacle exists in the map information described later, the evaluation section 340 may evaluate the reliability of the sound source direction to be high.

In addition, the evaluation section 340 according to the present embodiment is also able to evaluate the reliability of the sound source direction on the basis of a feedback of the user. For example, in the case of the example illustrated on the right side of FIG. 12, the user U makes a favorable utterance UO2 to the autonomous moving body 10 whose head is turned in a direction of the user U himself or herself. In a case where the user has given a favorable feedback to a direction-dependent motion corresponding to the sound source direction in this manner, the evaluation section 340 according to the present embodiment is able to evaluate the reliability of the sound source direction to be high.

In addition, the evaluation section 340 according to the present embodiment may evaluate the reliability of the sound source direction estimated by the sound localization section 312 on the basis of, for example, the map information regarding a space in which the autonomous moving body 10 exists.

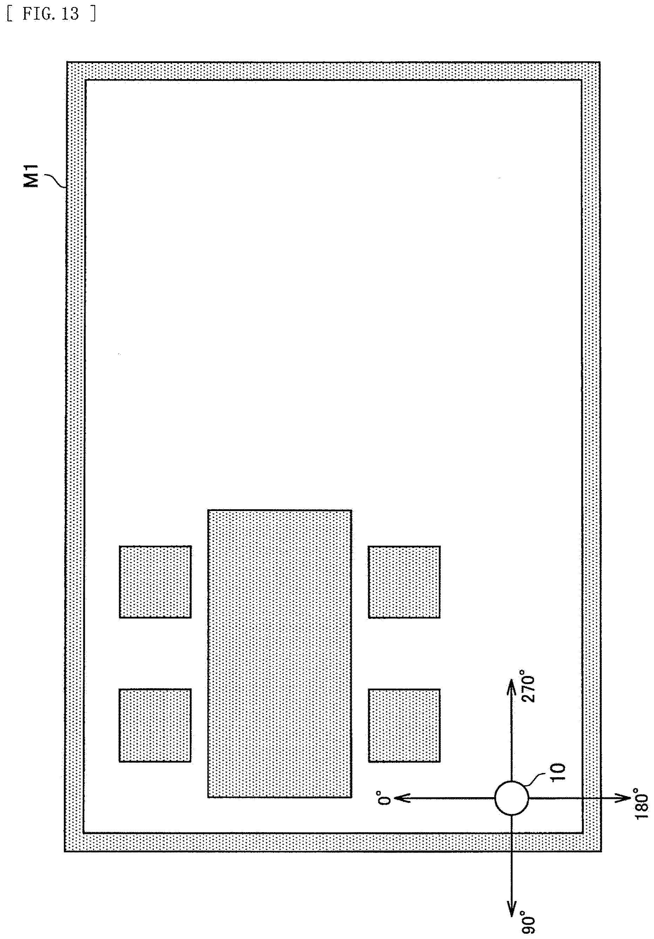

Here, the above map information may be, for example, an obstacle map including information on an obstacle in the space in which the autonomous moving body 10 exists. FIG. 13 is an explanatory diagram of reliability evaluation based on the obstacle map according to the present embodiment.

FIG. 13 illustrates an obstacle map M1 according to the present embodiment and a position of the autonomous moving body 10 at the time of evaluation in a manner associated with each other. It is to be noted that, in the obstacle map M1, obstacles such as walls and furniture are indicated by hatching.

At this time, in a case where an obstacle exists within a predetermined distance in the sound source direction estimated by the sound localization section 312, the evaluation section 340 according to the present embodiment may determine that the reliability of the sound source direction is low. For example, in a case where the sound localization section 312 estimates the sound source direction to be 90° or 180° in the example illustrated in FIG. 13, it can be said that there is an extremely small possibility that a user may exist because there are walls that are obstacles in the corresponding directions. In this manner, according to the evaluation section 340 of the present embodiment, it is possible to evaluate the estimated sound source direction with high accuracy on the basis of the information on obstacles that exist in the space.

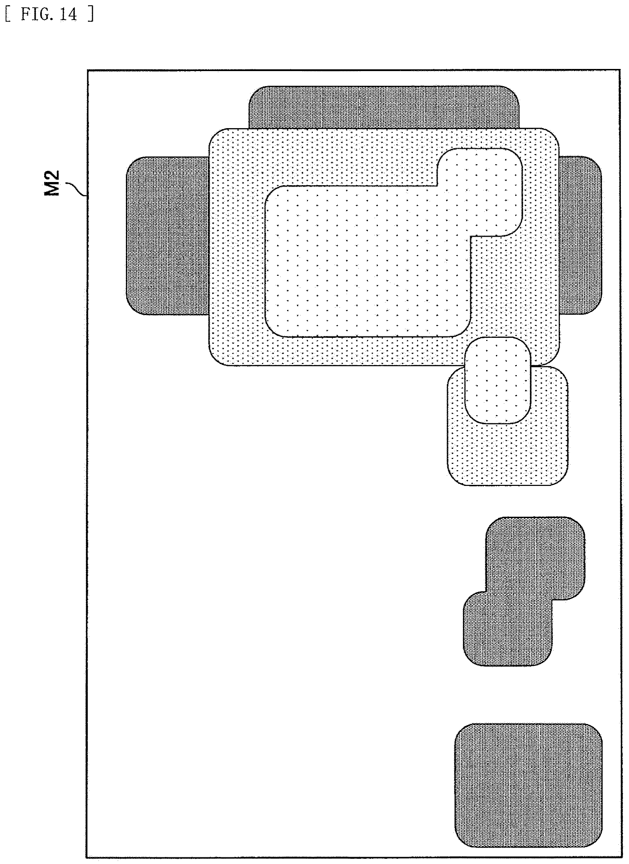

In addition, the map information according to the present embodiment may include, for example, a position in a space in which the autonomous moving body 10 exists and a reliability map indicating a tendency of reliability of the sound source direction estimated at the position. FIG. 14 is an explanatory diagram of reliability evaluation based on the reliability map according to the present embodiment.

FIG. 14 illustrates an example of a reliability map M2 according to the present embodiment. It is to be noted that, in the example illustrated in FIG. 14, the tendency of the reliability in a spatial position is represented by hatching concentration. For example, the reliability map M2 illustrated in FIG. 14 indicates that the reliability of the estimated sound source direction tends to be low at a position where the hatching concentration is high, and indicates that the reliability of the estimated sound source direction tends to be high at a position where the hatching concentration is low. The map information holding section 360 according to the present embodiment is able to generate the reliability map M2 as illustrated in FIG. 14 in a case where the evaluation achievements made by the evaluation section 340 are sufficiently accumulated.

At this time, the evaluation section 340 according to the present embodiment is able to evaluate the reliability of the sound source direction on the basis of the position of the autonomous moving body 10 at a time point when the sound source direction estimation is performed and on the basis of the reliability map M2. Specifically, in a case where it is indicated that the reliability of the sound source direction estimation tends to be high at a present position of the autonomous moving body 10, the evaluation section 340 may evaluate the reliability of the sound source direction estimated by the sound localization section 312 to be high. Meanwhile, in a case where it is indicated that the reliability of the sound source direction estimation tends to be low at the present position of the autonomous moving body 10, the evaluation section 340 is able to evaluate the reliability of the sound source direction estimated by the sound localization section 312 to be low. In this manner, the evaluation section 340 according to the present embodiment may evaluate the reliability of the sound source direction on the basis of past evaluation achievements.

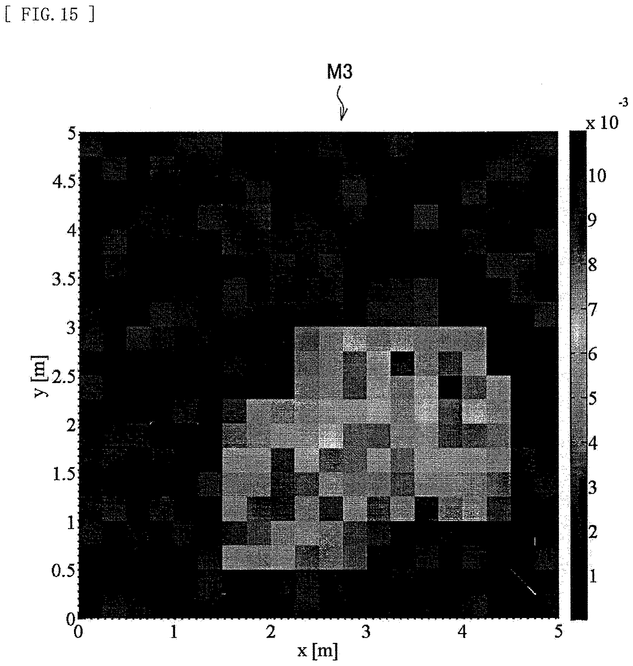

In addition, the map information according to the present embodiment may be an existence probability map indicating a correlation between the position in the space in which the autonomous moving body 10 exists and probability in which the user exists. FIG. 15 is an explanatory diagram of reliability evaluation based on the existence probability map according to the present embodiment.

FIG. 15 illustrates an example of an existence probability map M3 according to the present embodiment. In the existence probability map M3 illustrated in FIG. 15, high and low of the existence probability of the user with respect to spatial two-dimensional coordinates are represented by colors. The map information holding section 360 according to the present embodiment is able to generate the existence probability map M3 as illustrated in FIG. 15 on the basis of achievements of user recognition made by the recognition unit 120.

At this time, the evaluation section 340 according to the present embodiment is able to evaluate the reliability of the sound source direction on the basis of the sound source direction estimated by the sound localization section 312 and the reliability map M3. Specifically, in a case where it is indicated that the existence probability of the user is high in the sound source direction estimated by the sound localization section 312, the evaluation section 340 may evaluate the reliability of the sound source direction to be high. Meanwhile, in a case where it is indicated that the existence probability of the user is low in the sound source direction estimated by the sound localization section 312, the evaluation section 340 is able to evaluate the reliability of the sound source direction to be low. In this manner, it is possible for the evaluation section 340 according to the present embodiment to evaluate the reliability of the sound source direction with high accuracy on the basis of the existence probability of the user in the spatial position.

The description has been given above in detail of the evaluation of the sound source direction made by the evaluation section 340 according to the present embodiment. According to the evaluation section 340 of the present embodiment, it is possible to evaluate the reliability of the sound source direction with high accuracy from various viewpoints as described above. According to the above-described functions of the evaluation section 340 according to the present embodiment, it is possible to achieve an appropriate direction-dependent motion on the basis of the evaluation of the sound source direction.

### «2.3. Action Planning Based on Reliability Evaluation»

Next, description is given in detail of action planning based on reliability evaluation of the sound source direction according to the present embodiment. As described above, the action planning unit 140 according to the present embodiment is able to plan a direction-dependent motion corresponding to the sound source direction on the basis of the evaluation result regarding the reliability of the sound source direction.

Specifically, in a case where the reliability evaluated by the evaluation section 340 is equal to or more than a threshold value, the action planning unit 140 according to the present embodiment may plan an action of turning a head or a line of sight in the sound source direction estimated by the sound localization section 312, an action of running in the sound source direction, or the like. According to the above-described control performed by the action planning unit 140 of the present embodiment, it is possible for the autonomous moving body 10 to appropriately execute an action in line with expectations of the user, thus making it possible to enhance a degree of satisfaction of the user.

Meanwhile, in a case where the reliability evaluated by the evaluation section 340 falls below the threshold value, the action planning unit 140 according to the present embodiment may plan an action related to a posture change of the autonomous moving body 10 on the basis of the past evaluation achievements evaluated by the evaluation section 340. More specifically, in a case where the reliability falls below the threshold value, the action planning unit 140 may search past evaluation achievements having highly reliable evaluation, and may perform action planning to allow the autonomous moving body 10 to take a posture similar to the posture corresponding to the evaluation achievements on the basis of posture information included in the evaluation achievements.

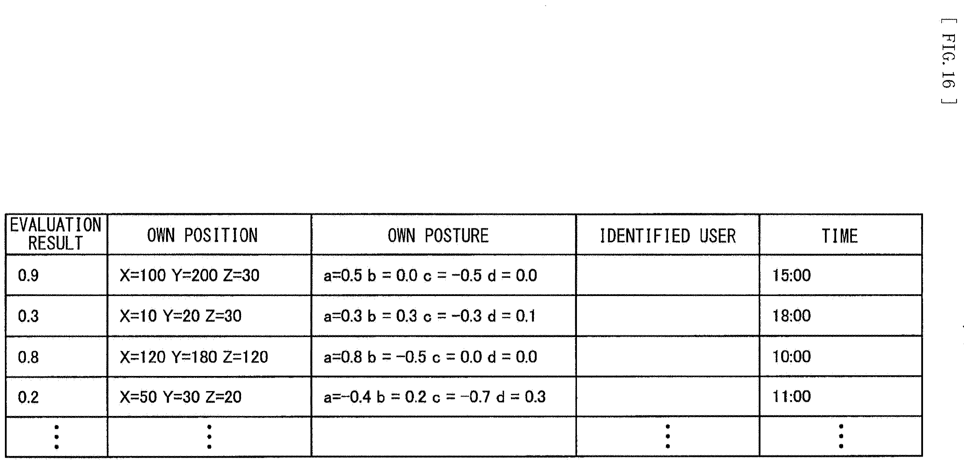

FIG. 16 illustrates examples of past evaluation achievements held by the evaluation result holding section 350 according to the present embodiment. Referring to FIG. 16, the evaluation achievements according to the present embodiment include evaluation results, own positions, own postures, identified users, time, and the like. It is to be noted that, in a case where the term posture is merely used, the term shall include both the above-described own position and own posture.

Here, the evaluation results indicate evaluation results of the reliability of the sound source direction estimation made by the evaluation section 340. The evaluation section 340 may evaluate the reliability by zero to one, for example, as illustrated in FIG. 16. It is to be noted that, in the examples illustrated in FIG. 16, as the value is closer to 1, the reliability is higher. For example, the evaluation section 340 may define, as an estimation error, a difference between a face image detection direction and an estimation result made by the sound source direction estimation, and may perform normalization thereof in a range from zero to one to thereby calculate the above reliability.

In addition, the above own position indicates spatial position coordinates of the autonomous moving body 10 at a time point when the sound source direction estimation is performed by the sound localization section 312. It is to be noted that coordinates in a Z-direction may be set on the basis of the position of the head of the autonomous moving body 10 or the microphone 515 in the vertical direction.

In addition, the above own posture indicates the three-axis posture of the autonomous moving body 10 at the time point when the sound source direction estimation is performed by the sound localization section 312. The own posture according to the present embodiment may be expressed by, for example, a quaternion as illustrated in FIG. 16. It is to be noted that the example of FIG. 16 illustrates values of a, b, c, and d in a case where a quaternion q is expressed as q = a+bi+cj+dk. According to the quaternion, it is possible to describe posture rotation only by four values, thus allowing for advantages of high memory efficiency and high-speed arithmetic operation.

In addition, the above identified user indicates a user identified by the recognition unit 120 when the sound source direction estimation is performed by the sound localization section 312. For example, the recognition unit 120 is able to identify a user based on user utterance-based speaker identification or image-based facial identification, or on the basis of user account information. For example, even when the own position and the own posture are the same or similar, a case is also presumed where the evaluation results regarding the reliability may change depending on characteristics of the user who makes the utterance. Accordingly, when performing evaluation regarding the reliability, the evaluation section 340 according to the present embodiment may cause the evaluation result holding section 350 to store information regarding the identified user together with the own position and the own posture.

In addition, the above-mentioned time indicates time at a time point when the sound source direction estimation is performed by the sound localization section 312. For example, even when the own position and the own posture are the same or similar, a case is also presumed, depending on time, where the environment such as the magnitude of noises may change that are derived from home electric appliances and the outdoor. Accordingly, when performing the evaluation regarding the reliability, the evaluation section 340 according to the present embodiment may cause the evaluation result holding section 350 to store time information together with the own position and the own posture.

The description has been given above of the example of information included in the evaluation achievements according to the present embodiment. It is to be noted that the evaluation achievements illustrated in FIG. 16 are merely examples, and the evaluation achievements according to the present embodiment may further include items other than those illustrated in FIG. 16.

Subsequently, description is given of action planning based on past evaluation achievements according to the present embodiment with reference to a specific example. As described above, one of feature of the action planning unit 140 according to the present embodiment is to, in a case where the evaluation results of the reliability of the sound source direction estimation made by the evaluation section 340 falls below the threshold value, acquire past evaluation achievements, and to plan an action related to the posture change on the basis of the evaluation achievements.

Here, for example, in a case where the evaluation achievements illustrated in FIG. 16 are obtained, the action planning unit 140 may perform action planning for movement to an own position (X = 100, Y = 200, and Z = 30) indicated by evaluation achievements on the first line having the highest evaluation results (0.9), and for taking of an own posture (a = 0.5, b = 0.0, c = -0.5, and d = 0.0) indicated by the evaluation achievements.

According to the above-described control made by the action planning unit 140, it is possible to cause the autonomous moving body 10 to take the position and the posture at which a highly reliable sound source direction was obtained in the past to thereby effectively improve the accuracy of the sound source direction estimation for the next utterance of the user.

In addition, for example, the action planning unit 140 may determine evaluation achievements to be employed on the basis of the identified user or time. For example, in a case where it is found by the user identification or the like in advance that the utterance is made by a user B, the action planning unit may perform action planning for movement to an own position (X = 120, Y = 180, and Z = 120) indicated by evaluation achievements on the third line (0.8) having higher evaluation of evaluation achievements regarding the user B, and for taking of an own posture (a = 0.8, b = -0.5, c = 0.0, and d = 0.0) indicated by the evaluation achievements. In addition, the action planning unit 140 is also able to select evaluation achievements having higher evaluation results among evaluation achievements close to the present time.

According to the above-described control made by the action planning unit 140 of the present embodiment, it is possible to achieve action planning with higher accuracy taking account of various factors regarding the sound source direction estimation.

In addition, for example, in a case where there are evaluation achievements having high evaluation results in the own position that coincides with or is similar to the present position of the autonomous moving body 10, the action planning unit 140 may perform planning for changing of only the own posture without moving.

According to the above-described control made by the action planning unit 140 of the present embodiment, it is possible to improve the accuracy of the sound source direction estimation for the next utterance of the user by a natural action with less motion.

The description has been given above of the action planning based on the past evaluation achievements according to the present embodiment with reference to specific examples. It is to be noted that the past evaluation achievements according to the present embodiment may be processed as map information such as the reliability map described above. In this case, the action planning unit 140 according to the present embodiment is able to perform planning for movement of the autonomous moving body 10 to a position where a highly reliable sound source direction tends to be obtained, on the basis of the reliability map M2 as illustrated in FIG. 14.

Meanwhile, in a case where the evaluation achievements are not sufficiently accumulated, a case is also presumed where highly reliable evaluation achievements are not acquired. In such a case, the action planning unit 140 according to the present embodiment may plan an action related to the posture change of the autonomous moving body 10 on the basis of another information.

The other information includes, for example, the existence probability map described above. That is, in a case where the reliability of the sound source direction evaluated by the evaluation section 340 falls below the threshold value and highly reliable past evaluation achievements are not obtained, the action planning unit 140 according to the present embodiment may perform planning for movement of the autonomous moving body 10 to coordinates presumed to have high existence probability of the user, on the basis of the existence probability map M3 as illustrated in FIG. 15.

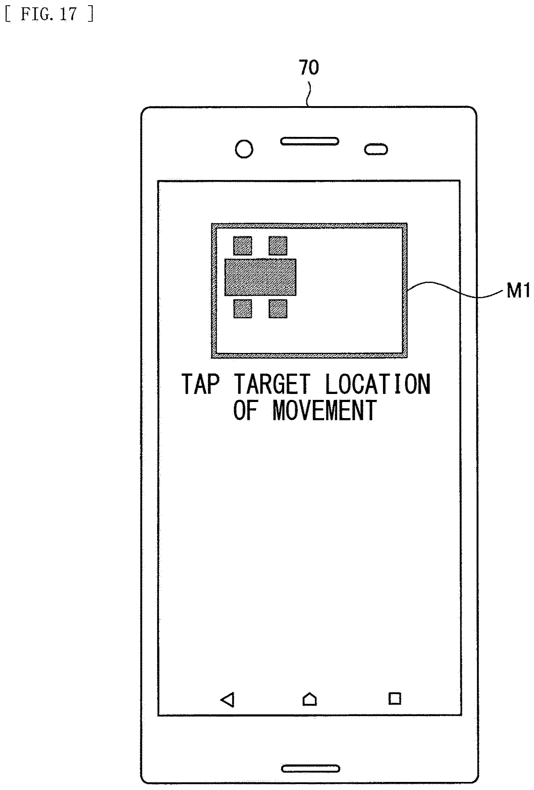

In addition, in a case where the highly reliable past evaluation achievements are not obtained, the action planning unit 140 according to the present embodiment may perform planning for movement of the autonomous moving body 10 to a position designated in advance by the user. FIG. 17 is an explanatory diagram of action planning based on user designation according to the present embodiment.

FIG. 17 illustrates an example of a user interface for designating a position to which the autonomous moving body 10 moves in a case where the reliability of the sound source direction estimation is low. The user interface may be displayed, for example, on an information processing terminal 70 such as a smartphone owned by the user. Here, the user interface may include, for example, map information regarding a space in which the autonomous moving body 10 is installed, such as the obstacle map M1, as illustrated in FIG. 17. In the obstacle map M1 or the like, the user is able to specify a position to which the autonomous moving body 10 is desired to be moved, for example, by tapping any position, in a case where the reliability of the sound source direction estimation is low.

According to the above-described method, in a case where the reliability of the sound source direction estimation is low, the autonomous moving body 10 is able to move to a fixed position designated by the user without moving to a different position each time, thus making it possible to reduce a sense of discomfort and a stress of the user. In addition, in this case, the user is able to perceive that the reliability of the sound source direction estimation is low on the basis of the autonomous moving body 10 having moved to the designated fixed position, and thus is able to take into consideration making an utterance from a direction that makes it easier to estimate the sound source direction.

### «2.4. Estimation of Sound Source Direction Based on Direction Weight»

Next, description is given of estimation of the sound source direction based on a direction weight according to the present embodiment. The description has been given above of the case where the autonomous moving body 10 according to the present embodiment evaluates the reliability of the sound source direction, and the action for enhancing the accuracy of the sound source direction estimation thereafter is planned when the reliability is low.

Meanwhile, the autonomous moving body 10 according to the present embodiment may perform processing for enhancing the accuracy of the sound source direction estimation itself. Specifically, the autonomous moving body 10 according to the present embodiment is able to calculate a direction weight related to the sound source direction estimation on the basis of the existence probability of the user, and to estimate the sound source direction using the direction weight.

For example, in a case where the own position of the autonomous moving body 10 is determined to be close to obstacles such as walls on the basis of the obstacle map M1 as illustrated in FIG. 13, it is possible to limit a range in a direction in which the user is highly likely to exist on the basis of a direction in which the obstacles exist. For example, in the example illustrated in FIG. 13, existence of walls in the direction of 90° to 360° relative to the autonomous moving body 10 narrows the range in which the user may exist to the range of 0° to 90°.

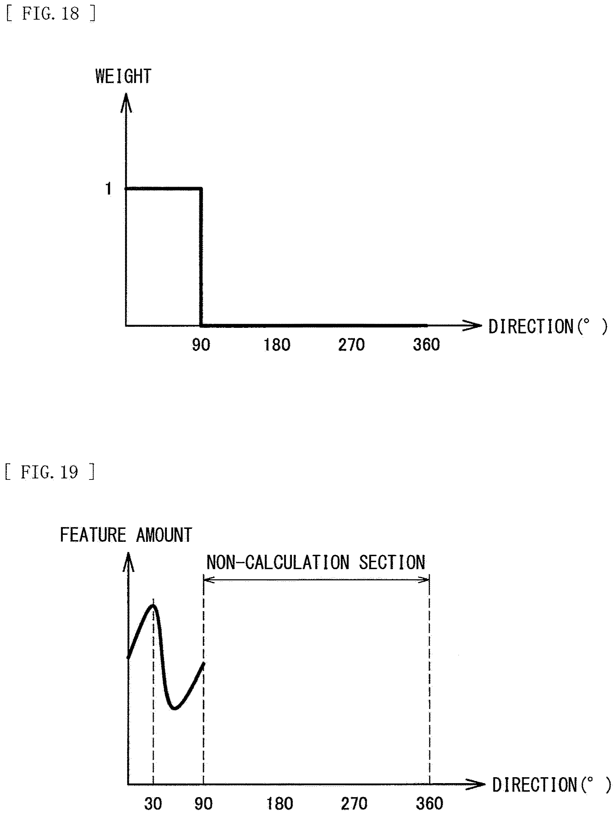

At this time, as illustrated in FIG. 18, the direction weight calculation section 370 according to the present embodiment may calculate the direction weight related to the sound source direction estimation. FIG. 18 illustrates an example of the direction weight based on the map information according to the present embodiment. In the example illustrated in FIG. 18, the direction weight calculation section 370 performs calculation, with the direction weight at 0° to 90° being set as one and the direction weight at 90° to 360° being set as zero.

In this case, the sound localization section 312 according to the present embodiment may estimate the sound source direction using the direction weight illustrated in FIG. 18. In typical sound source direction estimation, a feature amount is calculated for all directional ranges, and the most appropriate direction is determined to output the sound source direction estimation in many cases. However, the sound localization section 312 according to the present embodiment may calculate a feature amount only for a range in which the direction weight is larger than zero, without calculating the feature amount for a direction in which the direction weight is calculated to be zero, thus estimating the sound source direction.

FIG. 19 illustrates an example of the sound source direction estimation using a direction weight based on the map information according to the present embodiment. In the example illustrated in FIG. 19, the sound localization section 312 according to the present embodiment executes calculation of a feature amount only for a range of 0° to 90° in which the direction weight is calculated to be 1, while a range of 90° to 360° in which the direction weight is calculated to be zero is set as a non-calculation section in which the calculation of the feature amount is not performed. It is to be noted that, in the case of the example illustrated in FIG. 19, the sound localization section 312 may estimate, as the sound source direction, 30° at which the feature amount is the largest. That is, the sound localization section 312 according to the present embodiment is able to estimate the sound source direction in a directional range calculated on the basis of the map information.

In addition, the direction weight calculation section 370 according to the present embodiment may calculate the direction weight on the basis of information on images captured by the autonomous moving body 10. For example, in a case where no user is recognized in the recognizable range R illustrated in FIG. 12, it is presumed that no user exists in that range, thus making it possible to limit a range in a direction in which the user may possibly exist.

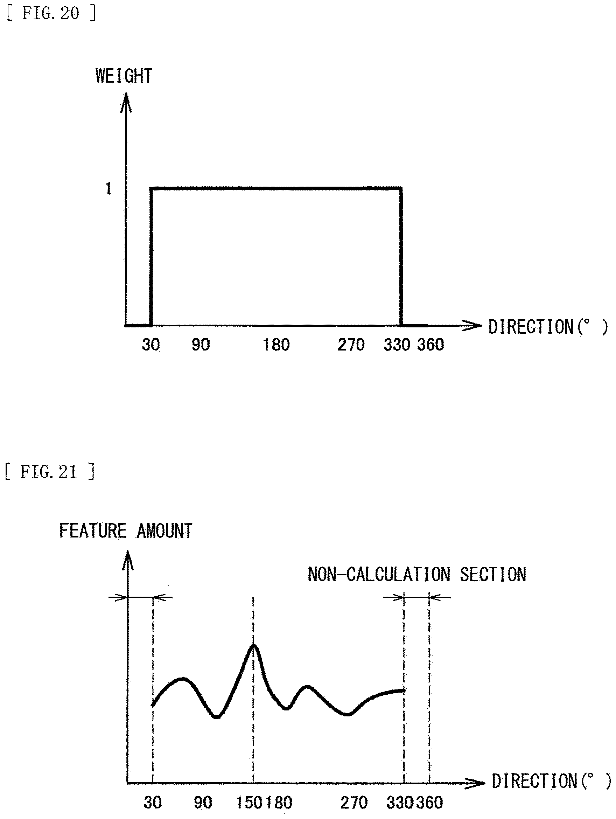

FIG. 20 illustrates an example of a direction weight based on the image information according to the present embodiment. In the example illustrated in FIG. 20, the direction weight calculation section 370 performs calculation, with the direction weight at 30° to 330° being set as one and the direction weight at 330° to 30° being set as zero, on the basis of the user being not recognized in the recognizable range R (330° to 30°).

At this time, as illustrated in FIG. 21, the sound localization section 312 according to the present embodiment may calculate the feature amount only in the range of 30° to 330° on the basis of the direction weight calculated by the direction weight calculation section 370. FIG. 21 is an example of the sound source direction estimation using the direction weight based on the image information according to the present embodiment. In the case of the example illustrated in FIG. 21, the sound localization section 312 may estimate, as the sound source direction, 150° at which the feature amount is the largest.

In this manner, the sound localization section 312 according to the present embodiment is able to limit the directional range related to the sound source direction estimation on the basis of the direction weight determined on the basis of the existence probability of the user. According to the sound source direction estimation method of the present embodiment, it is possible to exclude in advance a directional range in which the existence probability of the user is extremely low to thereby achieve highly accurate sound source direction estimation as well as to effectively reduce calculation costs of the feature amount.

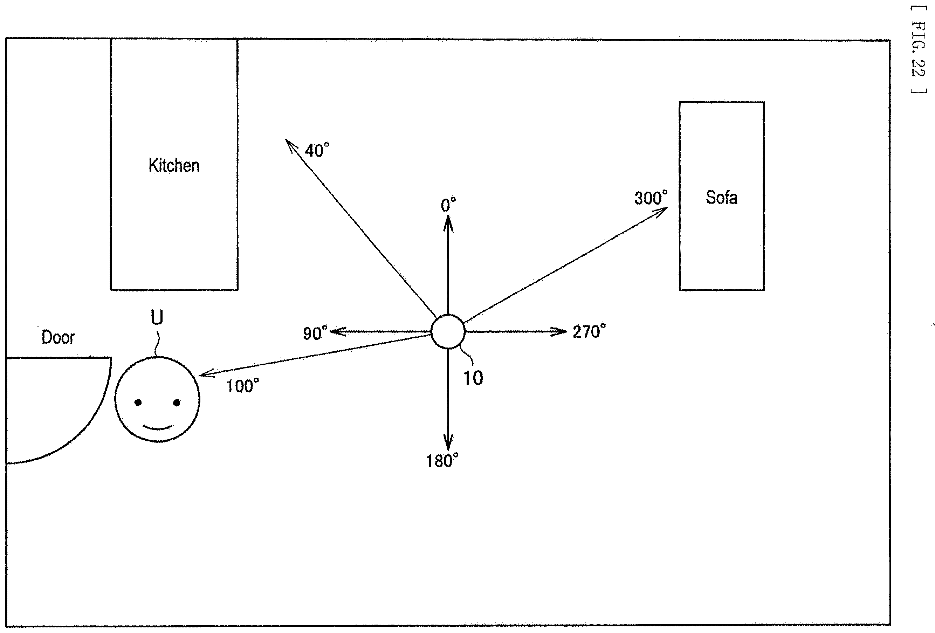

In addition, the direction weight calculation section 370 according to the present embodiment may calculate the direction weight on the basis of both the map information and the image information. FIG. 22 is an explanatory diagram of calculation of the direction weight based on the map information and the image information according to the present embodiment. FIG. 22 illustrates map information holding accessory information regarding arrangement of furniture such as a sofa by image recognition matching. At this time, the direction weight calculation section 370 according to the present embodiment may calculate the direction weight to be high for a direction in which the existence probability of the user is high, such as a kitchen, a door, or a sofa.

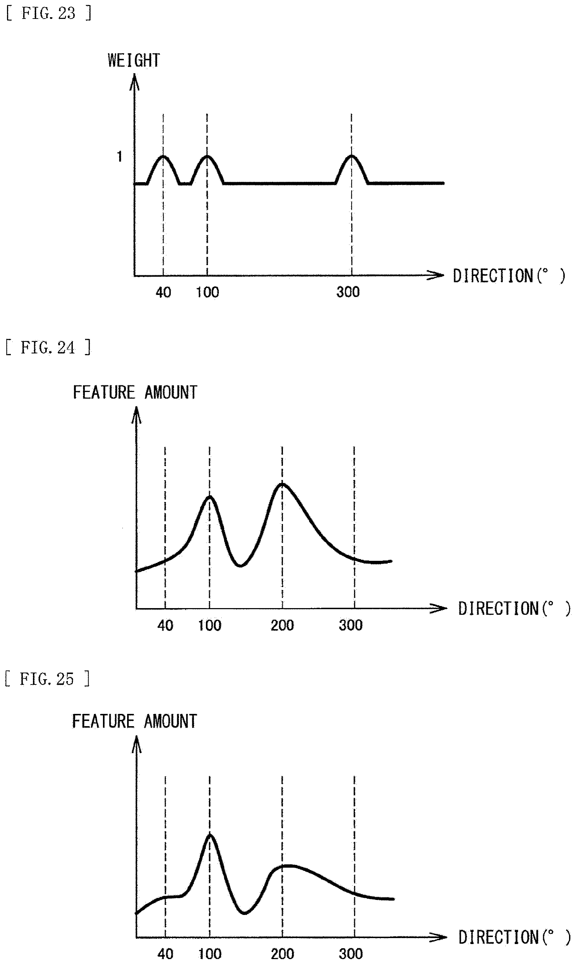

FIG. 23 illustrates an example of the direction weight based on the map information and the image information according to the present embodiment. In the example illustrated in FIG. 23, the direction weight calculation section 370 calculates, with reference to the autonomous moving body 10, the direction weights at around 40°, 100°, and 300°, in which the kitchen, the door, and the sofa are located, to be high in FIG. 22.

At this time, the sound localization section 312 according to the present embodiment first calculates the feature amounts in all directional ranges. FIG. 24 illustrates the example of the feature amount calculated in the all directional ranges by the sound localization section 312 according to the present embodiment. In the case of the example illustrated in FIG. 24, the calculated feature amount illustrates two peaks at 100° and 200°. Here, it is assumed that the peak at 200° is calculated to be larger than the original feature amount derived from an utterance sound of the user due to the influences of reflected waves and noises. At this time, the feature amount at 200° is larger than the feature amount at 100°; accordingly, in a case of estimating the sound source direction on the basis of only the feature amount, there is a possibility that a wrong direction (200°) may be estimated as the sound source direction due to the influences of the reflected waves and the noises.

Meanwhile, FIG. 25 illustrates the example of the feature amount after integration of a direction weight by the sound localization section 312 according to the present embodiment. The sound localization section 312 according to the present embodiment is able to obtain feature amounts integrated with direction weights, for example, by multiplication of the feature amounts calculated in all directional ranges for respective directions. Here, referring to FIG. 25, it is appreciated, in the feature amount after the integration of the direction weight, that the feature amount at 200° is largely reduced while the peak at 100° is maintained. In this manner, according to the sound source direction estimation method of the present embodiment, the calculation of the feature amount using the direction weight based on the existence probability of the user makes it possible to effectively eliminate the influences due to the reflected waves, the noise, etc., and to largely enhance a possibility that a correct direction may be estimated. «2.5. Flow of Action Planning Based on Sound Source Direction Estimation»

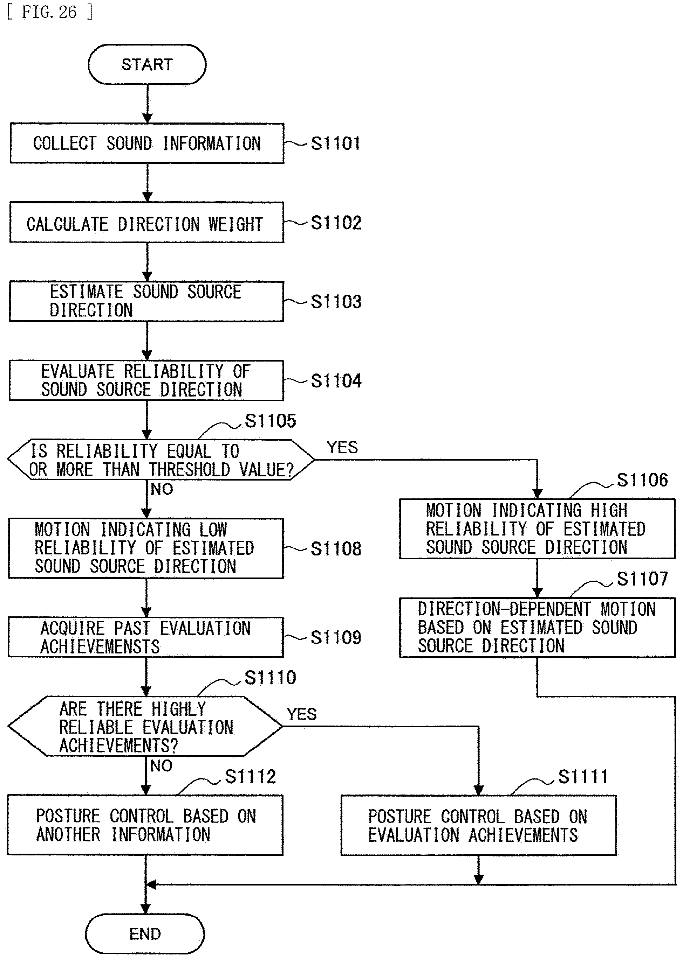

Next, description is given in detail of a flow of action planning based on the sound source direction estimation according to the present embodiment. FIG. 26 is a flowchart illustrating the flow of the action planning based on the sound source direction estimation made by the autonomous moving body 10 according to the present embodiment.

Referring to FIG. 26, first, the input unit 110 collects sound information regarding an utterance of a user, or the like (S1101).

Next, the direction weight calculation section 370 calculates a direction weight on the basis of map information and image information (S1102).

Next, the sound localization section 312 calculates a feature amount using the direction weight calculated in step S1102, and performs estimation of a sound source direction (S1103). It is to be noted that voice enhancement by the voice enhancement section 314 and voice recognition by the voice recognition section 320 may be executed, in parallel with steps S1102 and S1103.

Next, the evaluation section 340 evaluates reliability of the sound source direction estimated in step S1103 on the basis of a result of user recognition and the map information (S1104).

Next, the action planning unit 140 determines whether or not the reliability of the sound source direction evaluated in step S1104 is equal to or more than a threshold value (S1105).

Here, in a case where the reliability of the sound source direction is equal to or more than the threshold value (S1105: YES), the action planning unit 140 plans an action indicating high reliability of the estimated sound source direction, and the operation control unit 150 controls the drive unit 160 and the output unit 170 on the basis of the plan (S1106). It is to be noted that examples of the above action indicating the high reliability include actions such as barking, blinking, raising one ear, nodding, and wagging.

Subsequently, the action planning unit 140 plans a direction-dependent motion on the basis of the estimated sound source direction, and the operation control unit 150 controls the drive unit 160 and the output unit 170 on the basis of the plan (S1107).

Meanwhile, in a case where the reliability of the sound source direction falls below the threshold value (S1105: NO), the action planning unit 140 plans an action indicating low reliability of the estimated sound source direction, and the operation control unit 150 controls the drive unit 160 and the output unit 170 on the basis of the plan (S1108). It is to be noted that examples of the above action indicating the low reliability include actions such as roaring, shifting a line of sight to the left or the right, and tilting a neck.

Next, the action planning unit 140 acquires past evaluation achievements from the evaluation result holding section 350 (S1109).

Here, in a case where highly reliable evaluation achievements are acquired (S1110: Yes), the action planning unit 140 plans an action related to a posture change on the basis of own positional information and own posture information of the evaluation achievements, and the operation control unit 150 controls the drive unit 160 and the output unit 170 on the basis of the plan (S1111).

Meanwhile, in a case where there are no highly reliable evaluation achievements (S1110: NO), the action planning unit 140 plans an action related to a posture change on the basis of another information such as the existence probability map, and the operation control unit 150 controls the drive unit 160 and the output unit 170 on the basis of the plan (S1112).

### <3. Second Embodiment>

### «3.1. Overview»

Next, description is given of a second embodiment of the present disclosure. In the first embodiment described above, the description has been given of the method of enhancing the accuracy of the sound source direction estimation and effective action planning in a case where the reliability of the sound source direction estimation is low. Meanwhile, in an apparatus having a voice recognition function such as the autonomous moving body 10, a difficulty in voice recognition may be increased or voice recognition may become impossible in some cases depending on operating conditions. Accordingly, in the above-described cases, it is also important to indicate to the user the difficulty and availability of the voice recognition, and to gain the understanding.

Here, examples of the method of indicating a status such as the difficulty or availability of the voice recognition include explicitly notifying the user of the above-described status using a letter or an icon, for example. However, in the case of an apparatus simulating a living creature having no communication means by a language such as a dog, as in the autonomous moving body 10 according to an embodiment of the present disclosure, an explicit status notification as described above reduces the way a living creature behaves, resulting in giving a strong sense of discomfort to the user.

A technical idea according to the second embodiment of the present disclosure has been conceived by focusing on the above-described respects, and enables a user to perceive a status related to voice recognition with a more natural motion. To this end, one of features of the autonomous moving body 10 according to the present embodiment is to perform shielding control of a +microphone hole on the basis of the status related to the voice recognition.

Hereinafter, description is given in detail of the above-mentioned features of the autonomous moving body 10 according to the present embodiment. It is to be noted that, in the following, description is given focusing on differences from the first embodiment, and detailed description is omitted for configurations and functions common to those of the first embodiment. «3.2. Shielding Control of Microphone Hole »

As described above, one of the features of the autonomous moving body 10 according to the present embodiment is to perform a control of shielding a microphone hole 517 on the basis of the status related to the voice recognition. Here, the microphone hole 517 according to the present embodiment may be a configuration to be provided on an exterior surface in order to allow an external sound to reach the microphones 515 disposed inside the autonomous moving body 10. That is, it can be said that the microphone 515 is open to the outside through the microphone hole 517. In addition, the microphone hole 517 may be configured to be visually recognizable by the user.

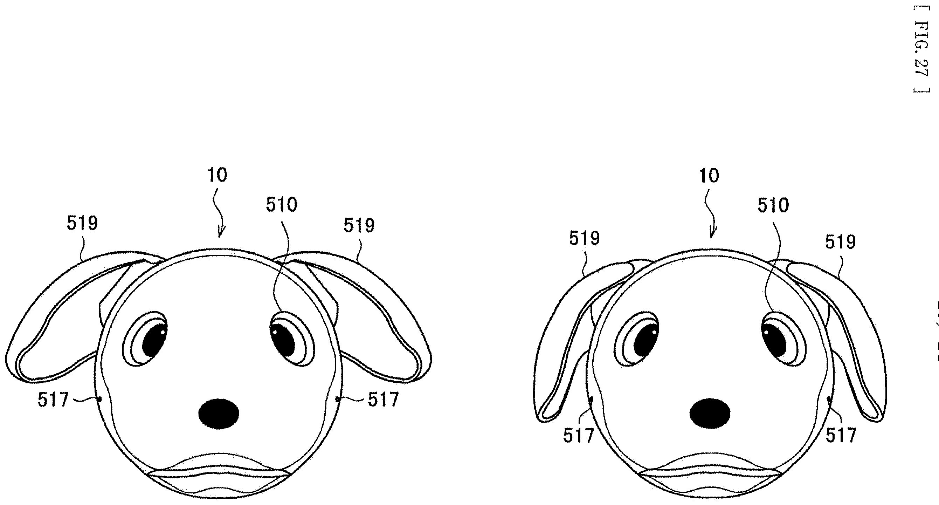

At this time, the action planning unit 140 and the operation control unit 150 according to the present embodiment may control the shielding state of the microphone hole 517 by a shield 519 on the basis of the difficulty in the voice recognition. FIG. 27 is an explanatory diagram of the shielding state control of the microphone hole 517 on the basis of the difficulty in the voice recognition according to the present embodiment.

In the example illustrated in FIG. 27, the action planning unit 140 and the operation control unit 150 control the shielding state of the microphone hole 517 using the shield 519, which is a configuration equivalent to an ear of the autonomous moving body 10. In this manner, the shield 519 according to the present embodiment may be one of body parts of a living organism simulated by the autonomous moving body 10.

At this time, for example, in a case where the difficulty in the voice recognition is low, such a case where the autonomous moving body 10 remains still, the action planning unit 140 according to the present embodiment plans an action of lifting the shield 519 by a predetermined angle or more to reduce the shielding range of the microphone hole 517 by the shield 519, as illustrated in left side of FIG. 27, and the operation control unit 150 controls the actuator 570 that drives the shield 519 on the basis of the plan.

According to the above-described control, it is possible for the user to visually recognize a state in which the ear of the autonomous moving body 10 is raised to open the microphone hole 517, to thereby enable the user to intuitively perceive a state in which the difficulty in the voice recognition is low.

Meanwhile, in a case where the autonomous moving body 10 is performing a relatively intense autonomous motion, thus causing the difficulty in the voice recognition to be high due to the influence of driving sounds of the actuator 570, etc., the action planning unit 140 according to the present embodiment plans an action of bringing the shield 519 closer to the microphone hole 517 to increase the shielding range of the microphone hole 517 by the shield 519, as illustrated in right side of FIG. 27, and the operation control unit 150 controls the actuator 570 that drives the shield 519 on the basis of the plan.

According to the above-described control, it is possible for the user to visually recognize a state in which the ear of the autonomous moving body 10 is lowered to shield the microphone hole 517 in a wide range, to thereby enable the user to intuitively perceive a state in which the difficulty in the voice recognition is high.

As described above, one of the features of the autonomous moving body 10 according to the present embodiment is to control the shielding state of the microphone hole 517 by the shield 519 that simulates a body part of a living organism on the basis of the difficulty in the voice recognition. According to the above-described features of the autonomous moving body 10 of the present embodiment, it is possible for the user to perceive the status related to the voice recognition by a more natural motion close to the actual living creature.

It is to be noted that, the example illustrated in FIG. 27 exemplifies the case where the autonomous moving body 10 increases or decreases the shielding range of the microphone hole by the shield 519, on the basis of the difficulty in the voice recognition. However, the autonomous moving body 10 may be controlled to completely shield the microphone hole 517 in a case where the difficulty in the voice recognition is extremely high. In addition, in a case where the autonomous moving body 10 has a plurality of microphone holes 517 as illustrated in FIG. 27, the autonomous moving body 10 may perform a shielding control of at least one of the microphone holes 517.

### <4. Hardware Configuration Example>

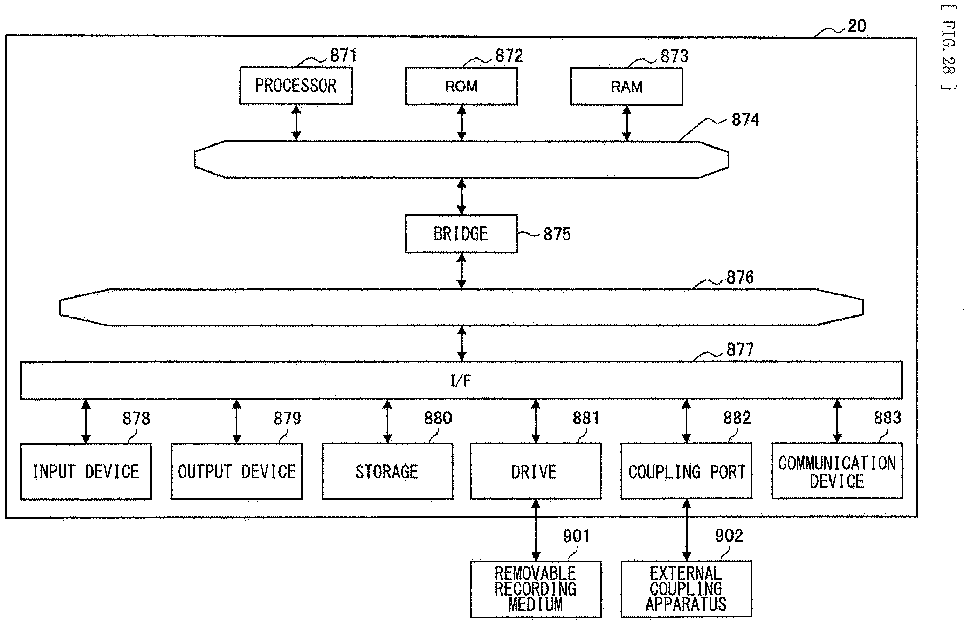

Next, description is given of a hardware configuration example of the information processing server 20 according to an embodiment of the present disclosure. FIG. 28 is a block diagram illustrating a hardware configuration example of the information processing server 20 according to an embodiment of the present disclosure. Referring to FIG. 28, the information processing server 20 includes, for example, a CPU 871, a ROM 872, a RAM 873, a host bus 874, a bridge 875, an external bus 876, an interface 877, an input device 878, an output device 879, a storage 880, a drive 881, a coupling port 882, and a communication device 883. It is to be noted that the hardware configuration illustrated herein is merely an example, and a portion of the components may be omitted. In addition, a component other than the components illustrated herein may be further included.

### (CPU 871)

The CPU 871 functions as an arithmetic processor or a controller, for example, and controls overall operations or a portion thereof of respective components on the basis of various programs recorded in the ROM 872, the RAM 873, the storage 880, or a removable recording medium 901.

### (ROM 872 and RAM 873)

The ROM 872 is a means that stores programs to be read by the CPU 871 and data to be used for arithmetic operations. For example, a program to be read by the CPU 871, and various parameters that change appropriately when the program is executed, etc. are stored in the RAM 873 temporarily or permanently.

### (Host Bus 874, Bridge 875, External Bus 876, and Interface 877)

The CPU 871, the ROM 872, and the RAM 873 are coupled to one another, for example, via the host bus 874 that enables high-speed data transmission. Meanwhile, the host bus 874 is coupled to the external bus 876 having a relatively low data transmission speed, for example, via the bridge 875. In addition, the external bus 876 is coupled to various components via the interface 877.

### (Input Device 878)

For example, a mouse, a keyboard, a touch panel, a button, a switch, a lever, and the like are used as the input device 878. Further, a remote controller (hereinafter, a remote control) that is able to transmit a control signal utilizing infrared rays or other radio waves may also be used as the input device 878 in some cases. In addition, the input device 878 includes a sound input device such as a microphone.

### (Output Device 879)

The output device 879 is a device that is able to visually or auditorily notifying a user of acquired information, for example, a display device such as a CRT (Cathode Ray Tube), an LCD, or an organic EL, an audio output device such as a speaker or a headphone, a printer, a mobile phone, or a facsimile, etc. In addition, the output device 879 according to the present disclosures includes a variety of vibrating devices that are able to output tactile stimuli.

### (Storage 880)

The storage 880 is a device for storing various data. As the storage 880, for example, a magnetic storage device such as a hard disk drive (HDD), a semiconductor storage device, an optical storage device, a magneto-optical storage device, or the like is used.

### (Drive 881)

The drive 881 is, for example, a device that reads information recorded in the removable recording medium 901 or writes information into the removable recording medium 901, such as a magnetic disk, an optical disk, a magneto-optical disk, or a semiconductor memory.

### (Removable Recording Medium 901)

The removable recording medium 901 is, for example, a DVD medium, a Blu-ray (registered trademark) medium, a HD DVD medium, various semiconductor storage media, or the like. It is needless to say that the removable recording medium 901 may be, for example, an IC card mounted with a non-contact type IC chip, an electronic apparatus, or the like.

### (Coupling Port 882)

The coupling port 882 is, for example, a port for coupling of an external coupling apparatus 902, such as a USB (Universal Serial Bus) port, an IEEE 1394 port, an SCSI (Small Computer System Interface), an RS-232C port, or an optical audio terminal.

### (External Coupling Apparatus 902)

The external coupling apparatus 902 is, for example, a printer, a portable music player, a digital camera, a digital video camera, or an IC recorder.

### (Communication Device 883)

The communication device 883 is a communication device for coupling to a network, and is, for example, a communication card for a wired or wireless LAN, Bluetooth (registered trademark), or a WUSB (Wireless USB), a router for optical communication, an ADSL (Asymmetric Digital Subscriber Line) router, or a modem for various communications.

### <5. Conclusion>

As described above, the autonomous moving body 10 according to an embodiment of the present disclosure includes the action planning unit 140 that performs action planning of the moving body acting on the basis of recognition processing, and the evaluation section 340 that evaluates reliability of the estimated sound source direction. In addition, one of the features of the action planning unit 140 according to an embodiment of the present disclosure is to plan a direction-dependent motion corresponding to a sound source direction on the basis of results of evaluation of the reliability made by the evaluation section 340 and on the basis of past evaluation achievements. According to such a configuration, it is possible to achieve a more natural and flexible action of the autonomous moving body on the basis of the estimated sound source direction.

Although the description has been given above in detail of preferred embodiments of the present disclosure with reference to the accompanying drawings, the technical scope of the present disclosure is not limited to such examples. It is obvious that a person having ordinary skill in the art of the present disclosure may find various alterations or modifications within the scope of the technical idea described in the claims, and it should be understood that these alterations and modifications naturally come under the technical scope of the present disclosure.

In addition, the effects described herein are merely illustrative or exemplary, and are not limitative. That is, the technology according to the present disclosure may achieve, in addition to or in place of the above effects, other effects that are obvious to those skilled in the art from the description of the present specification.

In addition, respective steps of the series of processing of the autonomous moving body 10 in the present disclosure need not necessarily be processed in chronological order illustrated in the flowchart. For example, the respective steps of the series of processing of the autonomous moving body 10 may be processed in an order different from the order illustrated in the flowchart, or may be processed in parallel.

It is to be noted that the technical scope of the present disclosure also includes the following configurations.
(1) An information processor including:
   an action planning unit that performs action planning of a moving body acting on a basis of recognition processing; and
   an evaluation section that evaluates reliability of an estimated sound source direction,
   the action planning unit planning a direction-dependent motion of the moving body corresponding to the sound source direction on a basis of a result of the evaluation of the reliability made by the evaluation section and a past evaluation achievement.
(2) The information processor according to (1), in which, in a case where the reliability falls below a threshold value, the action planning unit plans an action related to a change in a posture of the moving body on a basis of the past evaluation achievement.
(3) The information processor according to (2), in which the action planning unit plans the action related to the change in the posture of the moving body on a basis of posture information included in the past evaluation achievement of which the reliability is high.
(4) The information processor according to (3), in which the action planning unit performs action planning to allow the moving body to take a posture similar to a posture corresponding to the past evaluation achievement of which the reliability is high.
(5) The information processor according to (4), in which
   the posture information includes positional information on the moving body, and
   the action planning unit performs action planning to allow the moving body to move to a position corresponding to the past evaluation achievement of which the reliability is high.
(6) The information processor according to any one of (1) to (5), in which, in a case where the reliability falls below the threshold value, the action planning unit plans an action related to the change in the posture of the moving body on a basis of coordinates presumed to have high existence probability of a user.
(7) The information processor according to any one of (1) to (6), in which the evaluation section evaluates the reliability of the sound source direction on a basis of a recognition result of the user.
(8) The information processor according to (7), in which, in a case where the user is recognized in the estimated sound source direction, the evaluation section evaluates the reliability to be high.
(9) The information processor according to any one of (1) to (8), in which the evaluation section evaluates the reliability of the estimated sound source direction on a basis of map information regarding a space in which the moving body exists.
(10) The information processor according to (9), in which
   the map information includes information on an obstacle in the space in which the moving body exists, and
   in a case where the obstacle exists within a predetermined distance in the estimated sound source direction, the evaluation section evaluates the reliability of the sound source direction to be low.
(11) The information processor according to (9) or (10), in which
   the map information includes a position in the space in which the moving body exists and a reliability map indicating a tendency of the reliability of the sound source direction to be estimated at the position, and
   the evaluation section evaluates the reliability of the estimated sound source direction on a basis of the reliability map.
(12) The information processor according to (11), in which the action planning unit plans an action related to a change in a posture of the moving body on a basis of the reliability map.
(13) The information processor according to any one of (1) to (12), further including a sound localization section that estimates the sound source direction using a direction weight determined on a basis of existence probability of a user.
(14) The information processor according to (13), in which the sound localization section estimates the sound source direction on a basis of the direction weight calculated on a basis of map information regarding a space in which the moving body exists.
(15) The information processor according to (13) or (14), in which the sound localization section estimates the sound source direction in a directional range determined on a basis of map information regarding the space in which the moving body exists.
(16) The information processor according to any one of (13) to (15), in which the sound localization section estimates the sound source direction on a basis of the direction weight calculated on a basis of information on an image captured by the moving body.
(17) The information processor according to any one of (13) to (16), in which the sound localization section estimates the sound source direction on a basis of a feature amount integrated with the direction weight.
(18) The information processor according to any one of (13) to (17), further including a direction weight calculation section that calculates the direction weight.
(19) An information processing method including causing a processor to:
   perform action planning of a moving body acting on a basis of recognition processing; and
   evaluate reliability of an estimated sound source direction,
   the performing of the action planning further including planning a direction-dependent motion of the moving body corresponding to the sound source direction on a basis of a result of the evaluation of the reliability and a past evaluation achievement.
(20) A program that causes a computer to function as an information processor,
   the information processor including
   an action planning unit that performs action planning of a moving body acting on a basis of recognition processing, and
   an evaluation section that evaluates reliability of an estimated sound source direction,
   the action planning unit planning a direction-dependent motion of the moving body corresponding to the sound source direction on a basis of a result of the evaluation of the reliability made by the evaluation section and a past evaluation achievement.

### [Reference Numerals List]

- 10: autonomous moving body
- 110: input unit
- 120: recognition unit
- 130: learning unit
- 140: action planning unit
- 150: operation control unit
- 160: drive unit
- 170: output unit
- 312: sound localization section
- 340: evaluation section
- 350: evaluation result holding section
- 360: map information holding section
- 370: direction weight calculation section
- 510: display
- 570: actuator
- 20: information processing server
- 210: accumulation unit
- 220: analysis unit
- 230: terminal communication unit

## Claims

1. An information processor comprising:
an action planning unit that performs action planning of a moving body acting on a basis of recognition processing; and
an evaluation section that evaluates reliability of an estimated sound source direction,
the action planning unit planning a direction-dependent motion of the moving body corresponding to the sound source direction on a basis of a result of the evaluation of the reliability made by the evaluation section and a past evaluation achievement.

2. The information processor according to claim 1, wherein, in a case where the reliability falls below a threshold value, the action planning unit plans an action related to a change in a posture of the moving body on a basis of the past evaluation achievement.

3. The information processor according to claim 2, wherein the action planning unit plans the action related to the change in the posture of the moving body on a basis of posture information included in the past evaluation achievement of which the reliability is high.

4. The information processor according to claim 3, wherein the action planning unit performs action planning to allow the moving body to take a posture similar to a posture corresponding to the past evaluation achievement of which the reliability is high.

5. The information processor according to claim 4, wherein
the posture information includes positional information on the moving body, and
the action planning unit performs action planning to allow the moving body to move to a position corresponding to the past evaluation achievement of which the reliability is high.

6. The information processor according to claim 1, wherein, in a case where the reliability falls below a threshold value, the action planning unit plans an action related to a change in a posture of the moving body on a basis of coordinates presumed to have high existence probability of a user.

7. The information processor according to claim 1, wherein the evaluation section evaluates the reliability of the sound source direction on a basis of a recognition result of a user.

8. The information processor according to claim 7, wherein, in a case where the user is recognized in the estimated sound source direction, the evaluation section evaluates the reliability to be high.

9. The information processor according to claim 1, wherein the evaluation section evaluates the reliability of the estimated sound source direction on a basis of map information regarding a space in which the moving body exists.

10. The information processor according to claim 9, wherein
the map information includes information on an obstacle in the space in which the moving body exists, and
in a case where the obstacle exists within a predetermined distance in the estimated sound source direction, the evaluation section evaluates the reliability of the sound source direction to be low.

11. The information processor according to claim 9, wherein
the map information includes a position in the space in which the moving body exists and a reliability map indicating a tendency of the reliability of the sound source direction to be estimated at the position, and
the evaluation section evaluates the reliability of the estimated sound source direction on a basis of the reliability map.

12. The information processor according to claim 11, wherein the action planning unit plans an action related to a change in a posture of the moving body on a basis of the reliability map.

13. The information processor according to claim 1, further comprising a sound localization section that estimates the sound source direction using a direction weight determined on a basis of existence probability of a user.

14. The information processor according to claim 13, wherein the sound localization section estimates the sound source direction on a basis of the direction weight calculated on a basis of map information regarding a space in which the moving body exists.

15. The information processor according to claim 13, wherein the sound localization section estimates the sound source direction in a directional range determined on a basis of map information regarding a space in which the moving body exists.

16. The information processor according to claim 13, wherein the sound localization section estimates the sound source direction on a basis of the direction weight calculated on a basis of information on an image captured by the moving body.

17. The information processor according to claim 13, wherein the sound localization section estimates the sound source direction on a basis of a feature amount integrated with the direction weight.

18. The information processor according to claim 13, further comprising a direction weight calculation section that calculates the direction weight.

19. An information processing method comprising causing a processor to:
perform action planning of a moving body acting on a basis of recognition processing; and
evaluate reliability of an estimated sound source direction,
the performing of the action planning further including planning a direction-dependent motion of the moving body corresponding to the sound source direction on a basis of a result of the evaluation of the reliability and a past evaluation achievement.

20. A program that causes a computer to function as an information processor,
the information processor including
an action planning unit that performs action planning of a moving body acting on a basis of recognition processing, and
an evaluation section that evaluates reliability of an estimated sound source direction, the action planning unit planning a direction-dependent motion of the moving body corresponding to the sound source direction on a basis of a result of the evaluation of the reliability made by the evaluation section and a past evaluation achievement.
